(19)

**Europäisches Patentamt**
**European Patent Office**
**Office européen des brevets**

(11) **EP 1 431 919 B1**

(12) **EUROPEAN PATENT SPECIFICATION**

(45) Date of publication and mention
of the grant of the patent:
**03.03.2010 Bulletin 2010/09**

(51) Int Cl.:
*G06T 9/40* *(2006.01)*          *G06T 17/00* *(2006.01)*

(21) Application number: **03257599.5**

(22) Date of filing: **03.12.2003**

(54) **Method and apparatus for encoding and decoding three-dimensional object data by using octrees**

Verfahren und Vorrichtung zur Kodierung und Dekodierung dreidimensioneller Objekte mittels Octrees

Procédé et appareil pour le codage et le décodage d'objets tridimensionnels au moyen d'octrees

(84) Designated Contracting States:
**DE FR GB NL**

(30) Priority: **05.12.2002 US 430976 P**
**16.07.2003 US 487263 P**
**24.11.2003 KR 2003083778**

(43) Date of publication of application:
**23.06.2004 Bulletin 2004/26**

(73) Proprietors:
• **SAMSUNG ELECTRONICS CO., LTD.**
**Suwon-city,**
**Kyungki-do (KR)**
• **Seoul National University Industry Foundation**
**Seoul 151-818 (KR)**

(72) Inventors:
• **Park, In-kyu**
**Dongjak-gu**
**Seoul (KR)**
• **Lee, Shin-jun**
**Seocho-gu**
**Seoul (KR)**
• **Song, In-wook**
**Gwanak-gu**
**Seoul (KR)**
• **Kim, Chang-su**
**Geumcheon-gu**
**Seoul (KR)**
• **Lee, Sang-uk**
**Gangnam-gu**
**Seoul (KR)**

(74) Representative: **Greene, Simon Kenneth**
**Elkington and Fife LLP**
**Prospect House**
**8 Pembroke Road**
**Sevenoaks**
**Kent TN13 1XR (GB)**

(56) References cited:
• **Y. BAYAKOVSKI, A. IGNATENKO, A. ZHIRKOV, D. TIMASOV, A. KONUSHIN, L. LEVKOVICH-MASLYUK, MAHNJIN HAN, IN KYU PARK: "Depth image-based representations for static and animated 3D objects" LABORATORY OF COMPUTER GRAPHICS AT DEP OF CS MSU, [Online] 25 July 2002 (2002-07-25), pages 1-27, XP002271294 Retrieved from the Internet: URL: http://graphics.cs.msu.su/en/publicati ons/text/ dibr_csvt2002.pdf> [retrieved on 2004-02-24]**
• **BAYAKOVSKI Y ET AL: "Depth image-based representations for static and animated 3D objects" PROCEEDINGS 2002 INTERNATIONAL CONFERENCE ON IMAGE PROCESSING. ICIP 2002. ROCHESTER, NY, SEPT. 22 - 25, 2002, INTERNATIONAL CONFERENCE ON IMAGE PROCESSING, NEW YORK, NY: IEEE, US, vol. 2 OF 3, 22 September 2002 (2002-09-22), pages 25-28, XP010607501 ISBN: 0-7803-7622-6**
• **SAMET H ET AL: "Octree approximation and compression methods" PROCEEDINGS FIRST INTERNATIONAL SYMPOSIUM ON 3D DATA PROCESSING VISUALIZATION AND TRANSMISSION, PADOVA, ITALY, 19-21 JUNE 2002, 19 June 2002 (2002-06-19), - 21 June 2002 (2002-06-21) pages 460-469, XP010596692 Los Alamitos, CA, USA, IEEE Comput. Soc ISBN: 0-7695-1521-5**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**(Cont. next page)**

- CLEARY J G ET AL: "DATA COMPRESSION USING ADAPTIVE CODING AND PARTIAL STRING MATCHING" IEEE TRANSACTIONS ON COMMUNICATIONS, IEEE INC. NEW YORK, US, vol. COM-32, no. 4, April 1984 (1984-04), pages 396-403, XP000938651 ISSN: 0090-6778
- ZHIRKOV A: "Binary Volumetric Octree Representation for Image-Based Rendering" PROC. OF GRAPHICON'01, [Online] September 2001 (2001-09), XP002271295 Retrieved from the Internet: URL:http://citeseer.nj.nec.com/rd/ 0%2C5248 03%2C1%2C0.25%2CDownload/http: //citeseer.n j.nec.com/cache/papers/cs/ 26287/http://www .graphicon.ru:8100/en/ publications/../../e n/publications/text/Zhirkov_ 2001.pdf/zhirk ov01binary.pdf> [retrieved on 2004-02-24]

**Description**

The present invention relates to a method and apparatus for encoding and decoding data, and more particularly, to a method and apparatus for encoding and decoding three-dimensional object data comprised of one of point texture data, voxel data, and octree data.

One of the most fundamental goals of research on three-dimensional graphics has always been to generate as much realistic graphic screens as real images. Accordingly, research has been carried out on rendering technology using a polygonal model, and as a result, a variety of modeling and rendering techniques, capable of representing a very realistic three-dimensional environment, have been developed. However, strenuous efforts and a considerable amount of time are always required to establish complicated three-dimensional graphic models. In addition, a considerable amount of data is needled for representing a very realistic and sophisticated environment, which may end up in very low data storage and transmission efficiencies.

Currently, a polygonal model is generally adopted to represent three-dimensional objects in computer graphics. In this technique, an arbitrary shape can be roughly represented by a set of colorful polygons, for example, a set of triangles. Recent remarkable developments in software algorithms and graphic hardware have enabled a complicated object or scene to be visualized into a very realistic, still (or moving) polygonal model in real time.

For the past few years, research has been vigorously carried out on a technique of representing a three-dimensional object mostly because of difficulty in constructing polygonal models for a variety of objects in a real world, complexity of conventional rendering techniques, and limits in representing images as realistically as possible.

An application program needs a considerable number of polygons to represent three-dimensional objects. For example, a model for representing the human body in detail needs several millions of triangles, which is too many to deal with. Even though recent developments in three-dimensional measurement technology, such as three-dimensional scanning, make it possible to obtain sophisticated three-dimensional data whose errors are within an allowable bound, it is still very difficult and very expensive to obtain a polygonal model that perfectly matches with objects. In addition, a rendering algorithm for providing as realistic image representations as photographs is too complicated to support real-time rendering.

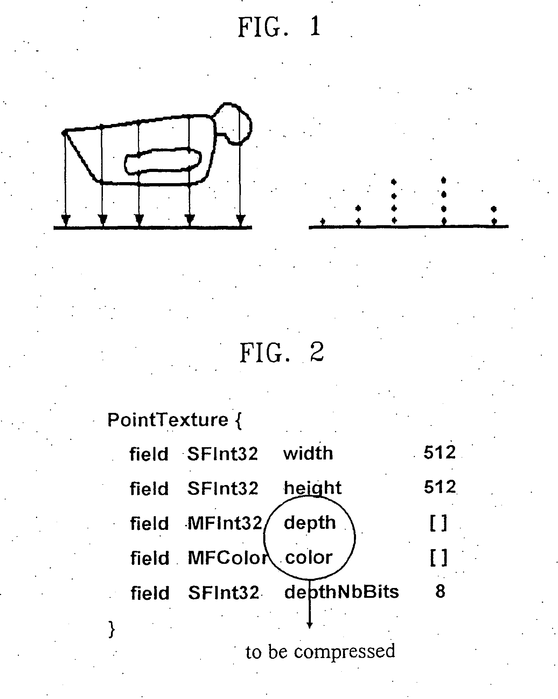

In the meantime, there is a relatively new method of representing or rendering an object having a complex geometrical structure, i.e., depth image-based representation (DIBR), which has been adopted in MPEG-4 Animation Framework extension (AFX). While polygonal meshes are generally used to represent objects in computer graphics, a set of reference images that cover a visible surface of a three-dimensional object is used to represent the three-dimensional object in DIBR. Each of the reference images is represented by a depth map, and the depth map presents an array of different distances between pixels on an image plane and the surface of the three-dimensional object. One of the biggest advantages of DIBR is that objects can be represented with high quality by simply using reference images without using polygonal models. In addition, the complexity of rendering a DIBR view is determined solely depending on the number of pixels constituting the DIBR view (i.e., the resolution of the DIBR view), irrespective of the complexity of a scene. DIBR includes SimpleTexture, PointTexture, and OctreeImage. PointTexture represents an object with PointTexture pixels seen from a predetermined camera position. Each of the PointTexture pixels is represented by its color and depth (a distance between each of the PointTexture pixels and the predetermined camera position) and other properties that help PointTexture rendering. A plurality of pixels may possibly be provided along lines of sight. A PointTexture image is generally comprised of a plurality of layers. FIG. 1 illustrates a simple example of a one-dimensional PointTexture image. PointTecture requires a considerable amount of data to realistically represent objects. In general, the more realistic images, the higher sampling density and the more data needed to be processed. Therefore, efficient compression of PointTexture images is strongly required. FIG. 2 illustrates node specifications of PointTexture. In FIG. 2, 'depth' and 'color' fields are the ones to be compressed.

Until now, research has not much been carried out on PointTexture, and thus there are only few conventional PointTexture-based methods. One of the conventional PointTexture-based methods is a layered depth image (LDI) compression method which has been disclosed by Duan and Li in "Compression of the Layered Depth Image", IEEE Trans. Image Processing, Vol. 12, No. 3, pp. 365-372, March 2003.

In the prior art, JPEG-LS algorithms have been adopted to compress depth information. On the other hand, color information is compressed using existing coding standards. However, such JPEG-LS algorithms do not support progressive data compression and progressive data transmission.

In the meantime, a method of compressing a three-dimensional voxel surface model using pattern code representation (PCR) has been disclosed by C. S. Kim and S. U. Lee in "Compact Encoding of 3D Voxel Surface Based on Pattern Code Representation, IEEE Trans. Image Processing, Vol. 11, No. 8, PP. 932-943, 2002. However, this method does not use a hierarchical octree structure and cannot facilitate progressive compression schemes. In addition, an octree-based data compression method [ISO/IEC JTC1/SC29/WG11 14496-16: 2003, Information Technology-Coding of Audio-Visual Objects- Part 16: Animation Framework extension] has been developed for PEG-4 AFX. However, this method, like the above-mentioned conventional methods, cannot provide progressive bitstreams.

Y. Bayakovski et al. present an approach to building a compact representation of a 3D object or scene by using images accompanied by depth values in a paper entitled "depth Image-Based Representations for Statis Animated 3D Objects" (Laboratory of Computer Graphics at Dep of CS MSU, [Online] 25 July 2002, Pages 1-27, Url: http://garaphics.cs.msu.su/en/publications/text/dibr csvt2002.pdf).

The present invention provides a method and apparatus for encoding and decoding three-dimensional object data comprised of point texture data, voxel data, and octree data, which can compress depth image information while guaranteeing more effective estimation encoding, higher data encoding efficiency, and more effective data lossly compression.

According to an aspect of the present invention, there is provided a method of encoding three-dimensional object data according to claim 1.

According to another aspect of the invention, there is provided an apparatus for encoding three-dimensional object data according to claim 15.

According to yet another aspect of the invention, there is provided a method of decoding three-dimensional object data according to claim 20.

According to a further aspect of the invention, there is provided an apparatus for decoding a bitstream of encoded three-dimensional object data according to claim 24.

According to another aspect of the present invention, there is provided a computer-readable recording medium on which a program enabling any of the above-mentioned methods is recorded.

The above and other features and advantages of the present invention will become more apparent by describing in detail exemplary embodiments thereof with reference to the attached drawings in which:

FIG. 1 is a diagram illustrating an example of point texture for a layered depth image;

FIG. 2 is a diagram showing point texture node standards;

FIGS. 3(a) through 3(d) are diagrams illustrating different octree structures for volume data in which each node is labeled;

FIG. 4 is a bit rate-distortion curve obtained when using a method of encoding three-dimensional object data;

FIG. 5 is a diagram illustrating a bitstream structure of a node;

FIG. 6 is a diagram illustrating a bitstream structure of an S node;

FIG. 7 is a diagram illustrating a bitstream structure of a P node;

FIGS. 8(a) and 8(b) are diagrams illustrating examples of contexts used in prediction-by-partial-matching (PPM) encoding;

FIG. 9 is a diagram illustrating a test model for testing the performance of the present invention;

FIGS. 10(a) and 10(b) are tables comparing the performance of the present invention compressing a point texture test model with the performance of other commercial tools (such as WinZip) compressing a PointTexture test model;

FIG. 11 is a block diagram of an apparatus for encoding three-dimensional data according to a preferred embodiment of the present invention;

FIG. 12 is a detailed block diagram of a merging order selector of FIG. 11;

FIG. 13 is a flowchart illustrating the operation of a candidate node selector of FIG. 12;

FIG. 14 is a flowchart illustrating the operation of the merging order selector;

FIG. 15 is a detailed block diagram of a node encoder of FIG. 11;

FIG. 16 is a flowchart illustrating the operation of the node encoder;

FIG. 17 is a flowchart illustrating the operation of an S node encoder of FIG. 15;

FIG. 18 is a flowchart illustrating the operation of a P node encoder of FIG. 15;

FIG. 19 is a block diagram of an apparatus for decoding three-dimensional object data according to a preferred embodiment of the present invention;

FIG. 20 is a detailed block diagram of a node decoder of FIG. 19;

FIG. 21 is a flowchart illustrating the operation of the node decoder;

FIG. 22 is a flowchart illustrating the operation of an S node decoder of FIG. 20; and

FIG. 23 is a flowchart illustrating the operation of a P node decoder of FIG. 20.

Hereinafter, a method and apparatus for encoding and decoding three-dimensional object data comprised of point texture data, voxel data, and tree-structured data according to a preferred embodiment of the present invention will be described in greater detail with reference to the accompanying drawings.

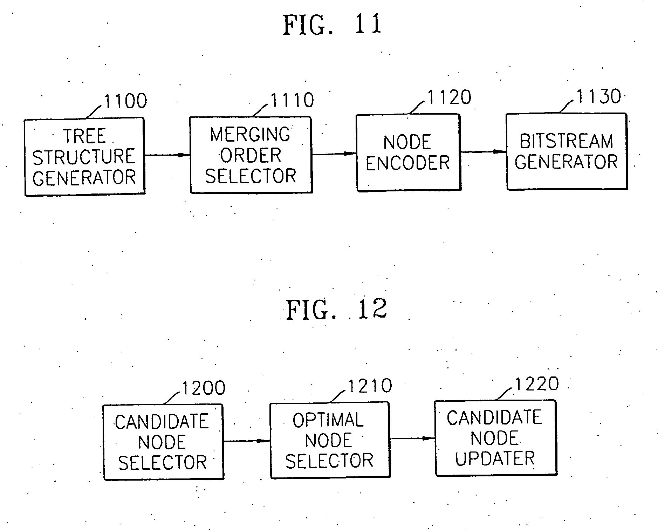

FIG. 11 is a block diagram of an apparatus for encoding three-dimensional object data according to a preferred embodiment of the present invention. Referring to FIG. 11, the apparatus includes a tree structure generator 1100, a merging order selector 1110, a node encoder 1120, and a bitstream generator 1130.

The tree structure generator 1100 receives point texture data, voxel data, or tree-structured data, which represents three-dimensional object data, and generates three-dimensional object data having a tree structure in which each node is labeled to be differentiated from others. Here, the tree structure is an octree structure.

Hereinafter, a method of generating an octree will be described in greater detail. A PointTexture, image is converted into volume data, and the volume data is alternately represented by an octree. Then, leaf nodes of the octree are effectively encoded by using a prediction-by-partial-matching (PPM) method. Accordingly, a method of encoding and decoding a three-dimensional object according to a preferred embodiment of the present invention is equivalent to a method of compressing a PointTexture model and an octree model.

In order to convert depth information of a three-dimensional object into volume data, bounding volume is created first. The bounding volume has the same resolution as PointTexture. For example, supposing that PointTexture represents an image with a resolution of XxY and depth information of each pixel has a resolution of Z, bounding volume having a resolution of $X \times Y \times Z$ is created. The origin of a bounding box is located at the lower left front corner of the bounding box. A right voxel has a value of x, which is larger than the value of a left voxel, an upper voxel has a value of y, which is larger than the value of a lower voxel, and a rear voxel has a value of z, which is larger than the value of a front voxels. Depth information can be immediately converted into binary volume data. All voxels of the volume data are initialized to W (white, '0'). Thereafter, the voxels of the volume data are set to B (black, '1') if their positions are referred to by pixels of the point texture. Black voxels represent dots on a three-dimensional object, and white voxels represent a transparent background.

The volume data is represented by an octree, and nodes of the octree are classified into four different categories. Labels respectively representing the four different categories are presented in Table 1 below. If bounding volume contains an object, a root node is labeled 'S', and the bounding volume is divided into eight identical sub-volumes. If a sub-volume only includes black voxels or white voxels, a corresponding node is labeled 'B' or 'W'. Otherwise, the node corresponding to the sub-volume is labeled 'S', and the sub-volume is further divided into eight identical smaller parts. This process is repeatedly carried out until it reaches a node at a predetermined depth of the octree. If a node at the predetermined depth of the octree includes black voxels as well as white voxels, the node is labeled 'P' and voxel values included in the node can be encoded by using a PPM method.

Table 1

| Labels | Comments |
| --- | --- |
| S | Split: Node is divided into 8 sub-nodes |
| W | White: Node is comprised of white voxels only |
| B | Fill Black: Node is completely or mostly comprised of black voxels |
| P | PPM: Voxel values in node are encoded by PPM algorithm |

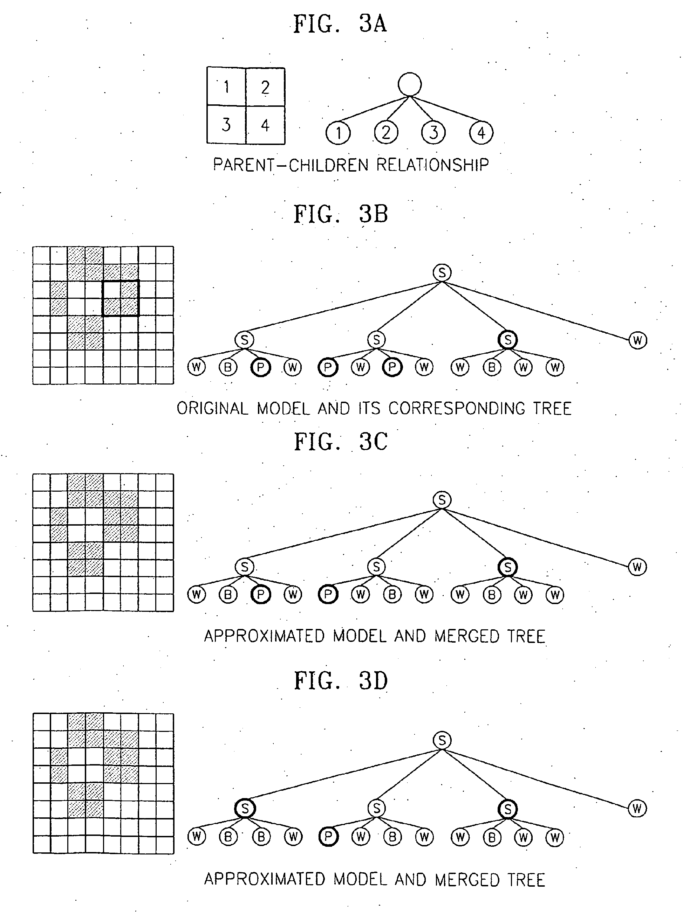

FIGS. 3(a) through 3(d) are diagrams illustrating different octree structures for volume data in which each node is labelled. In FIGS. 3(a) through 3(d), two-dimensional binary images and their respective quadtree representations are illustrated. More specifically, FIG. 3(a) illustrates a parent-children relationship in a quadtree structure, and FIG. 3 (b) illustrates a quadtree corresponding to a binary image, in which depth information of the binary image is set to 2. The binary image can be recovered without any data loss by using PPM-encoded data for the quadtree and three P nodes.

FIG. 12 is a detailed block diagram of the merging order selector 1110 of FIG. 11. The merging order selector 1110 merges nodes for three-dimensional object data represented by a tree structure, by referring to labels of the nodes. As shown in FIG. 12, the merging order selector 1110 includes a candidate node selector 1200, an optimal node selector 1210, and a candidate node updater 1220. The candidate node selector 1200 selects a node labelled 'P' and a node labelled 'S' as candidates to be merged. Here, an S node whose children nodes are all white nodes (hereinafter, referred to as 'W' nodes) or black nodes (hereinafter, referred to as 'B' nodes), or 'W' and 'B' nodes can be selected as a candidate to be merged. The optimal node selector 1210 selects, as an optimal node, a node for which a ratio of a difference $\Delta D$ between the number of distorted bits before a node merging process and the number of distorted bits after the node merging process with respect to a difference $\Delta R$ between the total number of bits before the node merging process and the total number of bits after the node merging process reaches its minimum. Thereafter, the optimal node selector 1210 labels the selected node 'B'. The candidate node updater 1220 updates all the candidate nodes except for the node selected as an optimal node.

Hereinafter, a tree merging method will be described more fully with reference to FIGS. 3(a) through 3(d), 13, and 14. FIG. 3 illustrates a labelled octree representation and tree merging. Nodes of an initial tree are repeatedly merged to approximate original depth information to a few refinement levels. Here, mergeable nodes are 'P'-labelled nodes or 'nodes whose children nodes are all B nodes or W nodes. For example, in a tree of FIG. 3(b), there are four mergeable nodes marked by a thicker-lined circle. Let us assume that among the four mergeable nodes, the one corresponding to a region marked by a square on a binary image is merged into a B node. A resulting binary image and a resulting tree are illustrated in FIG. 3(c). Now, as shown in FIG. 3(c), there are three mergeable nodes left. Then, one of the three mergeable nodes (i.e., a P node in the far-left of the tree illustrated in FIG. 3(c)) is merged into a B node. Then, a node which corresponds to an upper left quadrant of the approximated model of FIG. 3(d) and whose children nodes are all 'B' nodes or 'W' nodes becomes mergeable. This tree merging process is continuously carried out until all nodes of the tree are merged together under one root node.

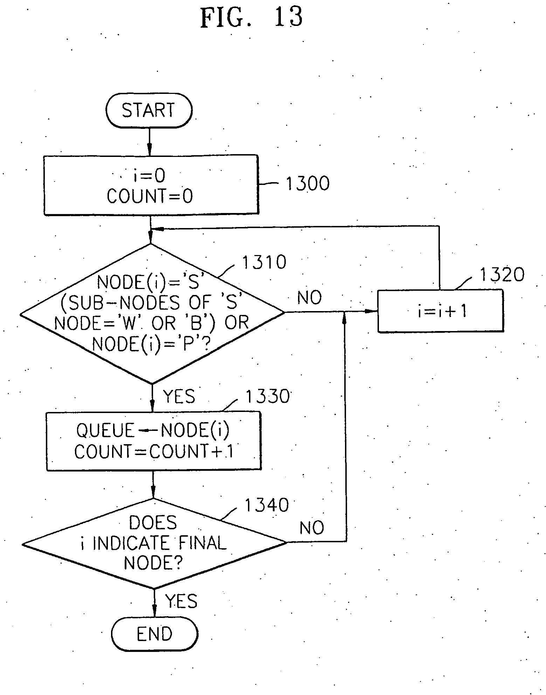

FIG. 13 is a flowchart illustrating the operation of the candidate node selector 1200. Supposing that 'i' represents a serial number of each node and 'count' represents the number of candidate nodes, 'i' and 'count' are initialised to 0 in step 1300. If a node is labelled 'S' or 'P' in step 1310, it is selected as a candidate node and then is stored in a queue, and 'count' is increased by 1 in step 1330. Here, among 'S' nodes, only the ones whose children nodes are all 'W' nodes or 'B' nodes, or 'W' nodes and 'B' nodes can be selected as candidate nodes. If the node is neither an 'S' node nor a 'P' node, step 1310 is carried out on a next node in step 1320. Steps 1310 through 1330 are repeatedly carried out until 'i' indicates a final node (in step 1340).

Nodes to be merged together are selected from among a set of mergeable nodes, and the ratio of ΔD to ΔR is minimized at a predetermined rate, which is shown in Equation (1) below.

$$ -\frac{\Delta D}{\Delta R} := -\frac{D_a - D_b}{R_a - R_b} \qquad \cdots(1) $$

In Equation (1), ΔR represents a difference between the total number ($R_a$) of bits before a node merging process and the total number ($R_b$) of bits after the node merging process, and ΔD represents a difference between the number ($D_a$) of distorted bits before the node merging process and the number ($D_b$) of distorted bits after the node merging process. When nodes are merged, a required bit rate decreases, but the degree to which an approximated model is distorted increases. Therefore, it is necessary to search for nodes which can minimize the possibility of the approximated mode being distorted and can maximize a decrease in the required bit rate once they are merged together.

In order to calculate ΔD, a Hamming distance between an original model V and a corresponding approximation is used as distortion measurement.

$$ D = \sum_{x=1}^{X}\sum_{y=1}^{Y}\sum_{z=1}^{Z}\left|V(x, y, z) - \hat{V}(x, y, z)\right| \qquad \cdots(2) $$

XxYxZ represents the resolution of a model.

In order to calculate ΔD, it is necessary to calculate the number of bits required (i.e., a required bit rate) for representing an octree and its PPM nodes. However, it is very complicated to calculate such a required bit rate. Therefore, the required bit rate is calculated by applying typical tree bits and PPM bits to several test models.

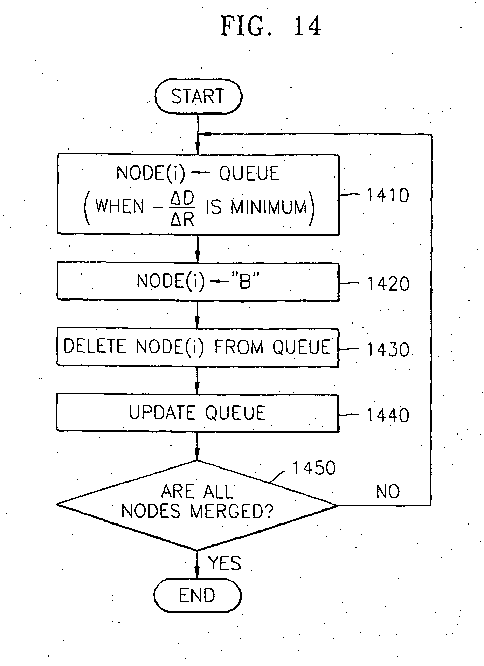

FIG. 14 is a flowchart illustrating the operation of the merging order selector 1210. Referring to FIG. 14, a node for which a minimum value can be obtained from Equation (1) is selected as an optimal node from among nodes that are selected by the candidate node selector 1200 as candidate nodes, in step 1410. In step 1420, the selected optimal node is labelled 'B'. In step 1430, the 'B'-labelled node is removed from a queue. In step 1440, the queue is updated. Steps 1410 through 1440 are repeatedly carried out until all nodes are merged together (in step 1450).

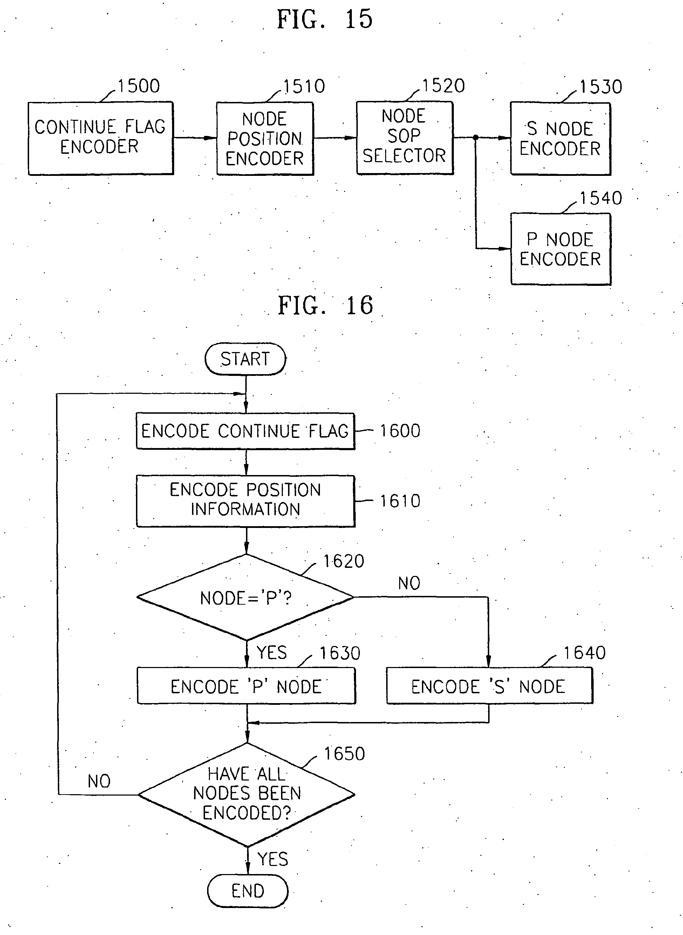

The node encoder 1120 encodes a merged node. FIG. 15 is a detailed block diagram of the node encoder 1120. Referring to FIG. 15, the node encoder 1120 includes a continue flag encoder 1500, a node position encoder 1510, a node S-or-P (SOP) selector 1520, an S node encoder 1530, and a P node encoder 1540.

The continue flag encoder 1500 encodes a continue flag which indicates whether or not a current node is the end of a compressed bitstream. If the current node is not the end of the compressed bitstream, the continue flag is set as 'true'. Otherwise, the continue flag is set as 'false'. The node position encoder 1510, which includes a candidate node queue in which nodes that are selected by the candidate node selector 1200 as candidate nodes are stored, encodes node position information which indicates the position of each of the candidate nodes in the candidate node queue. The node SOP selector 1520 encodes node type information which indicates whether the current node is an S node or a P node. The S node encoder 1530 encodes detailed information bit (DIB) data of a P node if the node type information indicates that the current node is a P node.

FIG. 16 is a flowchart illustrating the operation of the node encoder 1120. Referring to FIG. 16, a continue flag is encoded in step 1600. As described above, the continue flag indicates whether or not a current node is the end of a compressed bitstream. If the current node is not the end of the compressed bitstream, the continue flag is set as 'true'. Otherwise, the continue flag is set as 'false'. In step 1600, node position information is encoded. In step 1620, it is checked whether or not the merged node is a P node. If the merged node is a P node, P-node encoding is carried out in step 1630. Otherwise, S-node encoding is carried out. Steps 1600 through 1640 are repeatedly carried out until all nodes are encoded (in step 1650).

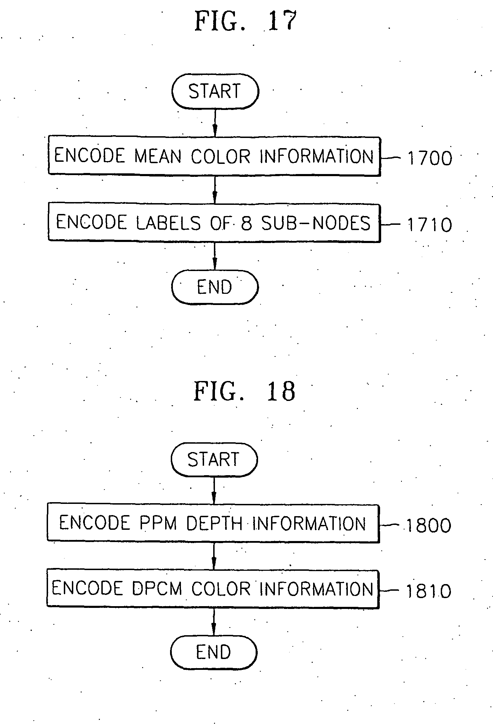

FIG. 17 is a flowchart illustrating the operation of the S node encoder 1520. Referring to FIG. 17, average color information is encoded in step 1700. In step 1710, labels of eight sub-nodes are encoded.

FIG. 18 is a flowchart illustrating the operation of the P node encoder 1530. Referring to FIG. 18, depth information is PPM-encoded in step 1800. In step 1810, color information is differential pulse code modulation (DPCM)-encoded.

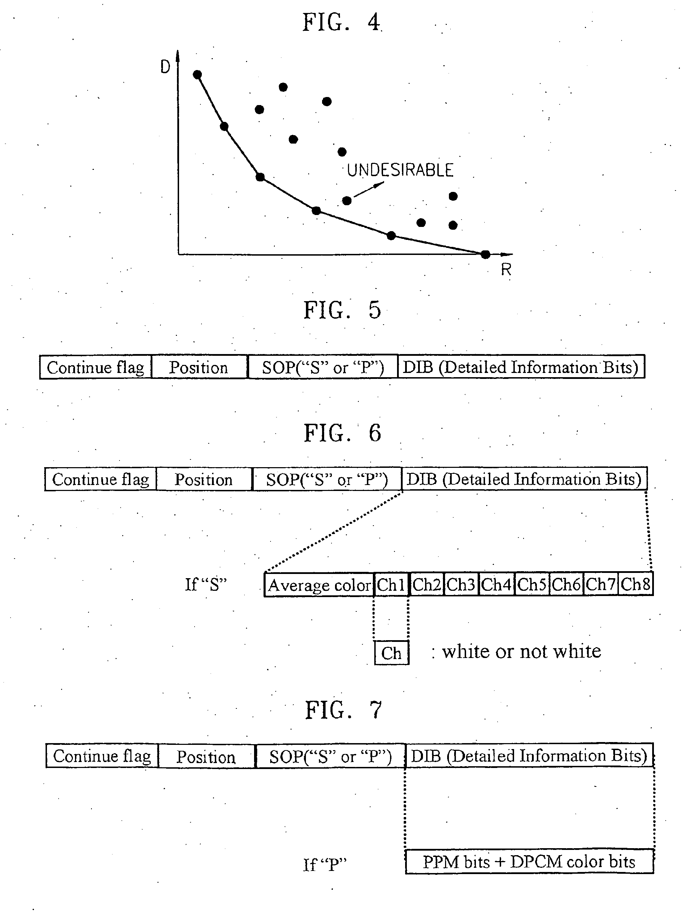

More specifically, nodes are merged in a predetermined order according to their priority levels determined using Equation (1), while bitstreams are encoded in the opposite order. In other words, a later-merged node is encoded ahead of an earlier-merged node. Therefore, a decoder may restore three-dimensional models ranging from the coarsest one to the most refined one from a compressed bitstream by parsing the compressed bitstream. A bit rate-distortion curve obtained by using the above-mentioned node merging method is illustrated in FIG. 4.

Hereinafter, the structure of a bitstream will be described in greater detail. A compressed bitstream is comprised of node data of an octree. The order of nodes in the compressed bitstream is just the opposite of a node merging order, as described above. FIG. 5 is a diagram illustrating the structure of a compressed bitstream of a predetermined node. Referring to FIG. 5, node information is comprised of a continue flag, position data, SOP data, and DIB data.

The continue flag indicates whether or not the predetermined node is the end of the compressed bitstream. All the data constituting the node information of FIG. 5 is entropy-encoded using an adaptive arithmetic coder (AAC). The position data indicates whether or not a 'B' node is to be split or to be PPM-encoded. For example, let us assume that a decoder restores the approximated model shown in FIG. 3(d) using all data that it has received. The octree of FIG. 3 (d) includes four 'B' nodes, which are candidate nodes to be merged. In order to obtain as much refined a model as the one shown in FIG. 3(c), an encoder informs the decoder that among the four 'B' nodes, a second one from the left of the octree should be PPM-encoded. If there are more than one candidate nodes to be merged, as shown in FIG. 3(d), in what order each of the candidate nodes, i.e., 'B' nodes, should be PPM-encoded is encoded as position data. If there is only one candidate node ('B' node), the position data is not necessary, and thus there is no need to encode the position data. The SOP data indicates whether the predetermined node should be split into eight children nodes or should be PPM-encoded. If the SOP data indicates that the predetermined node is an 'S' node, the DIB data is comprised of eight flags indicating what an average color of the predetermined node is and whether or not the predetermined node's children nodes are 'W' nodes. Non-'W' nodes are temporarily considered as B nodes and thus are stored in a queue in which 'B' candidate nodes for a next bitstream are recorded. FIG. 6 illustrates the structure of an 'S' node.

If the SOP data indicates that the predetermined node is a 'P' node, depth information of 'B' voxels, in the predetermined node is PPM-encoded, and color information of the 'B' voxels is DPCM-encoded. FIG. 7 illustrates the structure of a bitstream of a 'P' node. PPM was originally proposed by Cleary and Witten to compress facsimile data without any data loss.

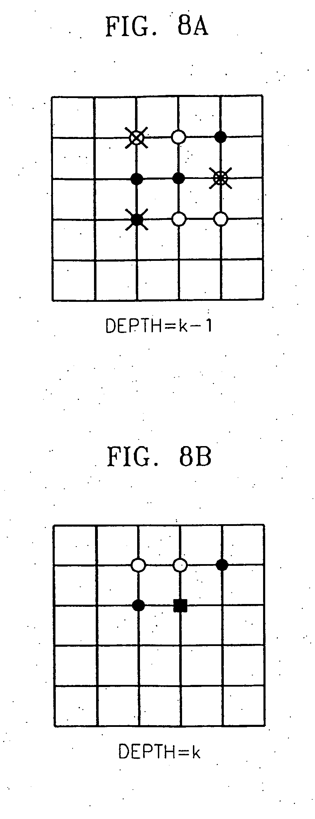

Hereinafter, PPM encoding will be described in greater detail. As described above, depth information is represented by binary voxel values. 'W' voxels represent a transparent background, and 'B' voxels represent a three-dimensional object. Binary voxels in a 'P' node are PPM-encoded by using voxels adjacent to the binary voxels as contexts. FIGS. 8(a) and 8(b) illustrate examples of contexts. Thirteen circular voxels are used as contexts to encode a rectangular voxel. According to raster scanning, 'W' voxels are set to '0', and 'B' voxels are set to '1'. These thirteen bits, i.e., the thirteen circular voxels, are used as contexts for a rectangular voxel shown in FIG. 8(b). In this case, contexts for the rectangular voxel can be represented by '0011101000011', in which case the number of contexts is $2^{13}$ However, $2^{13}$ contexts are too many to compute. Accordingly, there is a need to reduce the number of contexts. Voxels which do not increase entropy considerably even though they are removed away are selected through simulations. Two voxels are removed away first. Thereafter, another voxel is removed away. These three voxels are marked by 'X' in FIG. 8(a). An adaptive arithmetic coder compresses voxels by using this context.

A black square in FIG. 8(b) is encoded, while black circles in FIGS. 8(a) and 8(b) are used as contexts. In FIG. 8(a), the voxels marked by 'X' are the ones that are removed away.

After encoding the depth information, R, G, and B color values of a 'B' voxel in the predetermined node are DPCM-encoded according to a predetermined order defined by raster scanning. More specifically, the R, G, and B color values of the 'B' voxel are estimated based on R, G, and B color values of a previous 'B' voxel. Estimation residuals are encoded using an arithmetic coder.

The bitstream generator 1130 generates node-encoded data into a bitstream.

In the present invention, three-dimensional object data is encoded using a progressive encoding method. However, the three-dimensional object may possibly be encoded using a lossless encoding method or a lossly encoding method. When an entire bitstream is encoded, the way it is encoded could be lossless encoding. On the other hand, when only part of the bitstream ranging from a root node of a tree structure corresponding to the bitstream to a predetermined node in a lower level of the tree structure is encoded, the way it is encoded could be lossly encoding.

Hereinafter, a method and apparatus for decoding three-dimensional object data will be described in greater detail.

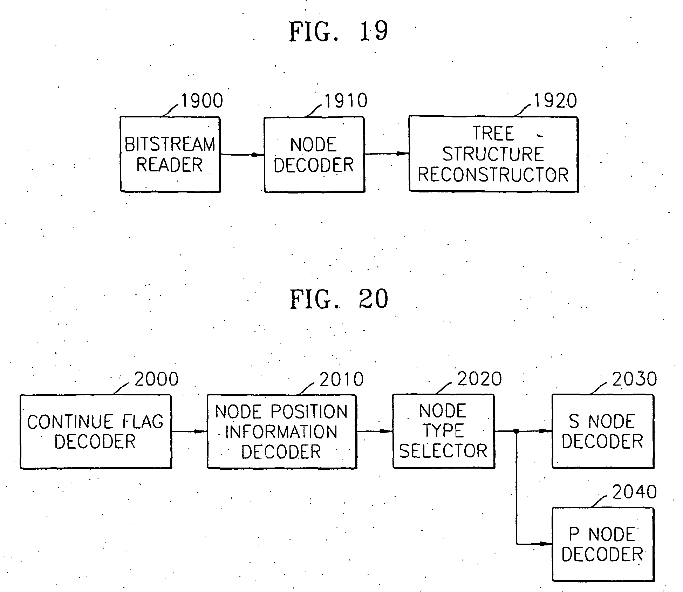

FIG. 19 is a block diagram of an apparatus for decoding three-dimensional object data according to a preferred embodiment of the present invention. Referring to FIG. 19, the apparatus includes a bitstream reader 1900, a node decoder 1910, and a tree structure restorer 1920. The bitstream reader 1900 receives an encoded bitstream of three-dimensional object data, the node decoder 1910 decodes the encoded bitstream, and the tree structure restorer 1920 restores decoded nodes into a tree structure.

FIG. 20 is a detailed block diagram of the node decoder 1910. The node decoder 1910 includes a continue flag decoder 2000, a node position information decoder 2010, a node type selector 2020, an S node decoder 2030, and a P node decoder 2040.

The continue flag decoder 2000 reads continue flag information from an encoded bitstream of three-dimensional object data and decodes the encoded bitstream. The node position information decoder 2010 reads node position information of the encoded bitstream and decodes the read node position information into position information indicating where a current node stands in a queue. The node type selector 2020 decodes node type information. If the node type information indicates that the current node is an S node, the S node decoder 2030 decodes an average color of eight sub-nodes as DIB data and then sequentially decodes the eight sub-nodes into 'B' nodes or'W' nodes. If the node type information indicates that the current node is a PPM node, the P node decoder 2040 PPM-decodes the DIB data of the current node. The P node decoder 2040 decodes R, G, and B colors of 'B' voxels of the current node by carrying out inverse AAC and inverse DPCM.

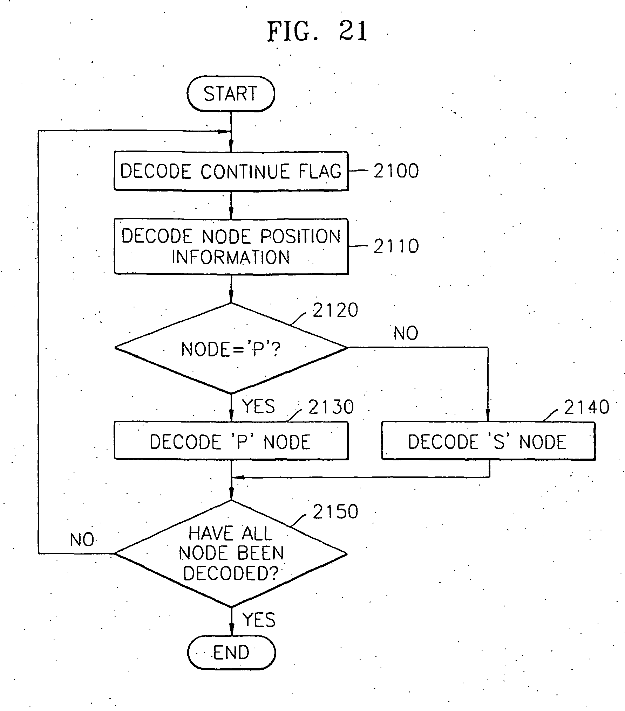

FIG. 21 is a flowchart illustrating the operation of the node decoder 1910. Referring to FIG. 21, a continue flag is decoded in step 2100. In step 2110, position data is decoded. In step 2120, it is checked whether or not a current node is a 'P' node. If the current node is a 'P' node, the current node is decoded using a 'P' node decoding method in step 2130. Otherwise, the current node is encoded using an 'S' decoding method. Steps 2100 through 2130 are repeatedly carried out until all nodes are decoded (in step 2150).

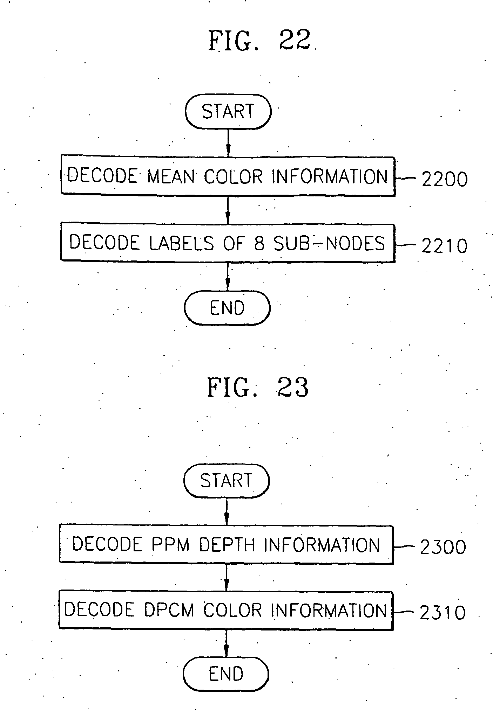

FIG. 22 is a flowchart illustrating the operation of the S node decoder 2020. Referring to FIG. 22, average color information is decoded in step 2200. In step 2210, labels of eight sub-nodes of a current node are decoded.

FIG. 23 is a flowchart illustrating the operation of the P node decoder 2030. Referring to FIG. 23, PPM depth information is decoded in step 2300. In step 2310, color information is decoded by carrying out inverse DPCM. More specifically, a current node is PPM-decoded using DIB data, and R, G, and B values of black voxels of the current node are decoded by carrying out inverse AAC and inverse DPCM.

Hereinafter, the method of decoding three-dimensional object data according to the present invention will be described in greater detail. The method of decoding three-dimensional object data according to the present invention is similar to the method of decoding three-dimensional object data according to the present invention. A decoder reads a continue flag of a bitstream and checks whether or not a current node is the end of the bitstream. Then, the decoder reads position data and SOP data and determines which nodes should be split or PPM-decoded based on the read position data and SOP data. If the current node is an 'S' node, color values of all voxels of the current node are temporarily set to an average of R, G, and B color values in DIB data. The color values of the voxels of the current node are updated when data of the current node's children nodes is received. If the current node is a 'P' node, depth and color information of 'B' voxels of the current node are losslessly restored using the DIB data.

In the present invention, three-dimensional object data is decoded in a progressive manner. In the progressive manner, nodes are decoded in a predetermined order in which bitstreams of image data are decoded. Therefore, if image data is displayed on a screen, decoded nodes are sequentially displayed on the screen in an order from an uppermost node to a lowermost node. Accordingly, as a decoding process reaches lower nodes in a tree structure representing three-dimensional object data, an image displayed on the screen becomes more refined and clearer. When the decoding process is over after decoding a final node, a most refined and clearest image is displayed on the screen.

As described above, in the present invention, three-dimensional object data is decoded in a progressive manner. However, the three-dimensional object may possibly be decoded using a lossless decoding method or a lossly decoding method. When an entire bitstream is decoded, the way it is decoded could be lossless decoding. On the other hand, when only part of the bitstream ranging from a root node of a tree structure corresponding to the bitstream to a predetermined node in a lower level of the tree structure is decoded, the way it is decoded could be lossly decoding.

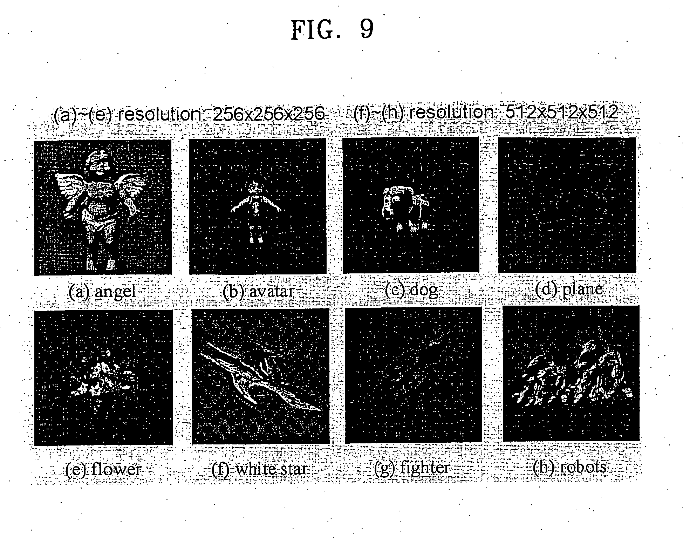

The performance of the methods of encoding and decoding three-dimensional object data according to the present invention was evaluated using test models illustrated in FIGS. 9(a) through 9(h). The test models shown in FIGS. 9(a) through 9(e) have a, resolution of $256 \times 256 \times 256$, and the test models shown in FIGS. 9(f) through 9(h) have a resolution of $512 \times 512 \times 512$.

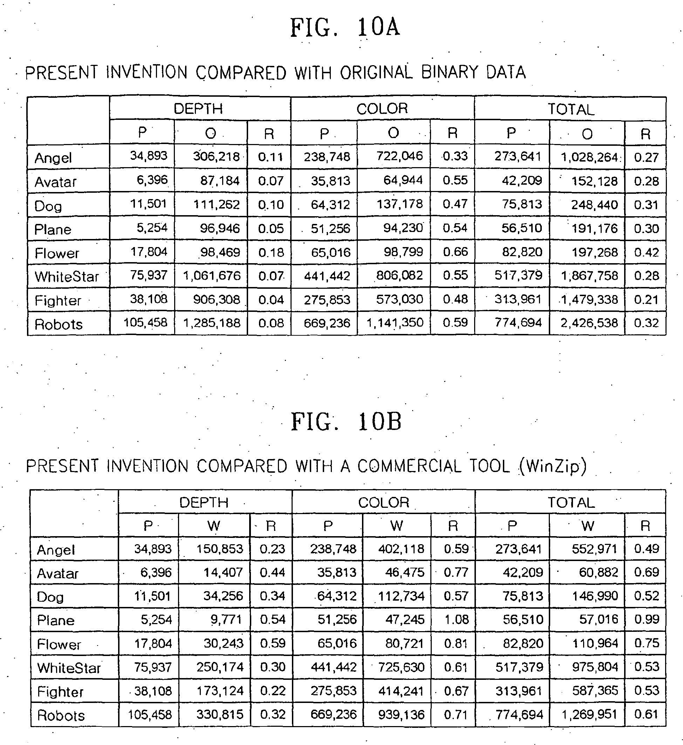

FIGS. 10(a) and 10(b) are tables illustrating the data compression performance of the present invention with that of WinZip. The present invention only requires 22 ~ 59 % of a file size that WinZip requires for processing depth information. The present invention only requires 59 ~ 81 % of a file size that WinZip requires for processing color information. However, in terms of processing a 'plane' model, WinZip shows better performance than the present invention because the 'plane' model only contains several colors and WinZip, which is a dictionary-based coder, is more suitable for dealing with the 'plane' model. The present invention only requires 49 ~ 75% of a file size that WinZip requires for compressing depth information and color information.

The present invention supports progressive data transmission and progressive data decoding that WinZip does not, which is noteworthy. Progressive data transmission and progressive data decoding are preferable because they facilitate adaptation of bitstreams to a bandwidth-limited environment and browsing of three-dimensional models.

The present invention suggests a progressive data compression method for PointTexture. In the progressive data compression method, pixels are closely related to one another in terms of color vectors and depth information. In the present invention, depth information and color information can be effectively encoded by applying a PPM method to an octree structure. Many simulation results show that the present invention provides a higher compression rate than a universal Lempel-Ziv coder, i.e., WinZip, does.

The present invention can be realized as computer-readable codes written on a computer-readable recording medium. The computer-readable recording medium includes all types of recording devices on which data can be recorded in a computer-readable manner. For example, the computer-readable recording medium includes ROM, RAM, CD-ROM, a magnetic tape, a floppy disk, an optical data storage, and a carrier wave, such as data transmission through the Internet. The computer-readable recording medium can be distributed over a plurality of computer systems that are connected to one another in a network sort of way, in which case data can be stored in the computer-readable recording medium in a decentralized manner.

While the present invention has been particularly shown and described with reference to exemplary embodiments thereof, it will be understood by those of ordinary skill in the art that various changes in form and details may be made therein without departing from the scope of the present invention as defined by the following claims.

**Claims**

1. A method of encoding three-dimensional object data, which is comprised of point texture data, voxel data, and octree structure data, the method comprising:

   (a) generating three-dimensional object data having a tree structure in which nodes are attached labels indicating their types;
   (b) encoding nodes of the three-dimensional object data; and
   (c) generating the three-dimensional object data whose nodes are encoded into a bitstream,
   wherein the step of generating the three-dimensional object data having a tree structure comprises converting the three-dimensional object data into voxel data using three-dimensional bounding volume and differently labeling the voxels depending on whether or not they are located at places where objects exist such that the voxels are differentiated from one another,
   and **characterized by** comprising the steps of:

   labeling a node having sub-nodes as being in a first category;
   labeling a node whose voxels do not contain objects as being in a second category;
   labeling a node whose voxels all contain objects as being in a third category; and
   labeling a node whose voxels are encoded using a Prediction-by-Partial-Matching, PPM, algorithm as being in a fourth category,

   wherein voxel values are encoded using a PPM algorithm if the node has some voxels that do not contain objects and has some voxels that do contain objects.

2. The method of any preceding claim, wherein encoding the nodes of the three-dimensional object data comprises:

   encoding node information which indicates whether or not a current node is labeled as being in the first or fourth category; and
   encoding Detailed Information Bit, i.e. DIB, data of a node of the first category if the node information indicates that the current node is a node of the first category and encoding DIB data of a node of the fourth category if the node information indicates that the current node is a node of the fourth category.

3. The method of any preceding claim, wherein in encoding the nodes of the three-dimensional object data, only some of the nodes of the three-dimensional object data, ranging from a root node to a predetermined lower node, are encoded.

4. The method of claim 1, wherein in encoding the nodes of the three-dimensional object data, all the nodes of the three-dimensional object data are encoded.

5. The method of claim 1 further comprising:

(ab) merging the nodes of the three-dimensional object data having a tree structure by referring to their labels; and
(d) repeatedly carrying out steps (a) through (c) until an uppermost node of the tree structure representing the three-dimensional object data is encoded, wherein the step (b) of encoding nodes comprises encoding merged nodes.

6. The method of claim 5, wherein step (ab) comprises:

selecting nodes of the first or fourth categories whose sub-nodes are labeled as being in the second category or third category as candidate nodes to be merged;
selecting, from among the candidate nodes as an optimal node, a node which can minimize a ratio of a difference $\Delta$ D between the number of distorted bits before merging the candidate nodes and the number of distorted bits after merging the candidate nodes with respect to a difference $\Delta$ R between the number of bits before merging the candidate bits and the number of bits after merging the candidate bits;
labeling the selected node as being in the third category; and
updating all the candidate nodes except the node selected as an optimal node.

7. The method of claim 6, wherein $\Delta$ $D$ is calculated in the following equation using a Hamming distance between an original model $V$ and its approximation $\overline{V}$ as distortion measurement:

$$D = \sum_{x=1}^{X} \sum_{y=1}^{Y} \sum_{z=1}^{Z} \left| V(x, y, z) - \hat{V}(x, y, z) \right|$$

where XxYxZ represents the resolution of the original model.

8. The method of claim 5 or 6, wherein step (b) of encoding nodes comprises:

encoding a continue flag which is information indicating whether or not the candidate nodes exist in a queue;
encoding node position information which indicates position of each of the candidate nodes in the queue;
encoding node type information which indicates whether or not a current node is a node of the first category or a node of the fourth category; and
encoding DIB data of a node of the first category if the node information indicates that the current node is anode of the first category and encoding DIB data of a node of the fourth category if the node information indicates that the current node is a node of the fourth category.

9. The method of claim 8, wherein encoding the DIB data of the node of the first category comprises:

encoding an average of color information; and
encoding labels of eight sub-nodes of the current node.

10. The method of claim 8 or 9, wherein encoding the DIB data of the node of the fourth category comprises:

encoding depth information; and
encoding the color information.

11. The method of claim 10, wherein in encoding the depth information, all nodes below a predetermined node in the tree structure representing the three-dimensional object data are PPM-encoded according to a raster scanning order by using a predetermined number of contexts.

12. The method of claim 10, wherein in encoding the color information, red (R), green (G), and blue (B) values of third category voxels of the current node are encoded by carrying out differential pulse code modulation (DPCM) and adaptive arithmetic coding (AAC).

13. The method of any of claims 5 to 12, wherein in step (b), only some of the merged nodes, ranging from a first one to a predetermined numbered one, are encoded.

14. The method of any of claims 5 to 12, wherein in step (b), all the merged nodes are encoded.

15. An apparatus for encoding three-dimensional object data, which is comprised of point texture data, voxel data, and octree structure data, the apparatus comprising:

a tree structure generator (1100) which generates three-dimensional object data having a tree structure in which nodes are attached labels indicating their types, wherein the tree structure generator is adapted to convert the three-dimensional object data into voxel data using three-dimensional bounding volume and to differently label the voxels depending on whether or not they are located at places where objects exist such that the voxels are differentiated from one another;
a merging order selector (1110) which merges the nodes of the three-dimensional object data by referring to their labels;
a node encoder (1120) which encodes merged nodes; and
a bitstream generator (1130) which generates the three-dimensional object data whose merged nodes are encoded into a bitstream,and **characterized in that** the tree structure generator (1100) is further adapted to:
label a node having sub-nodes as being in a first category;
label a node whose voxels do not contain objects as being in a second category;
label a node whose voxels all contain objects as being in a third category; and
label a node whose voxels are encoded using a Prediction-by-Partial-Matching, PPM, algorithm as being in a fourth category,
wherein voxel values are encoded using a PPM algorithm if the node has some voxels that do not contain objects and has some voxels that do contain objects.

16. The apparatus of claim 15, wherein the merging order selector (1110) comprises:

a candidate node selector (1200) which selects nodes of the first or fourth categories whose sub-nodes are labeled as being in the second category or third category as candidate nodes to be merged;
an optimal node selector (1210) which selects, from among the candidate nodes as an optimal node, a node which can minimize a ratio of a difference $\Delta D$ between the number of distorted bits before merging the candidate nodes and the number of distorted bits after merging the candidate nodes with respect to a difference $\Delta R$ between the number of bits before merging the candidate bits and the number of bits after merging the candidate bits and labels the selected node as being in the third category; and
a candidate node updater (1220) which updates all the candidate nodes except the node selected as an optimal node.

17. The apparatus of claim 15 or 16, wherein the node encoder (1120) comprises:

a continue flag encoder (1500) which encodes a continue flag which is information indicating whether or not a current node is the end of a compressed bitstream;
a node position encoder (1510) which encodes node position information indicating position of each of the candidate nodes in the queue;
a node 'S'-or-'P' (SOP) selector (1520) which encodes node type information indicating whether or not the current node is a node of the first category or a node of the fourth category;
an S node encoder (1530) which encodes Detailed Information Bit data, i.e. data, of a node of the first category if the node information indicates that the current node is a node of the first category; and
a P node encoder (1540) which encodes DIB data of a node of the fourth category if the node information indicates that the current node is a node of the fourth category.

18. The apparatus of claim 15, 16 or 17, wherein the node encoder (1120) encodes only some of the merged nodes, ranging from a first one to a predetermined numbered one, are encoded.

**19.** The apparatus of claim 15, 16 or 17, wherein the node encoder (1120) encodes all the merged nodes.

**20.** A method of decoding three-dimensional object data, comprising:

reading continue flag information from a bitstream of encoded three-dimensional object data and decoding the continue flag information, and

**characterized by** comprising the steps of:

decoding node type information of the bitstream;
decoding an 'S' node if the node type information indicates that a current node is a node having sub-nodes and decoding a PPM node if the node type information indicates that the current node is a node whose voxels are encoded using a Prediction-by-Partial-Matching, PPM, algorithm; and
restoring the three-dimensional object data whose nodes are encoded to a tree structure.

**21.** The method of claim 20, further comprising the step of:

reading node position information indicating which candidate node in a queue is a current node and decoding the node position information.

**22.** The method of claim 21, wherein in decoding the 'S' node, an average color of eight sub-nodes of the current node is decoded as Detailed Information Bit data, i.e. DIB data, and the eight sub-nodes are sequentially decoded into black nodes ('B' nodes) whose voxels all contain objects or white nodes ('W' nodes) whose voxels do not contain objects.

**23.** The method of claim 22, wherein in decoding the PPM node, the current node is PPM-decoded using DIB data, and R, G, and B values of 'B' voxels of the current node are decoded by carrying out inverse AAC and inverse DPCM.

**24.** An apparatus for decoding a bitstream of encoded three-dimensional object data, the apparatus comprising:

a bitstream reader (1900) which receives a bitstream of encoded three-dimensional object data, and **characterised by** further comprising:

a node type selector (2020) which decodes node type information of the bitstream;
an 'S' node decoder (2030) which decodes a current node if the node type information indicates that a current node is a node having sub-nodes;
a P node decoder (2040) which decodes a current node if the node type information indicates that the current node is a node whose voxels are encoded using a Prediction-by-Partial-Matching, PPM, algorithm; and
a tree structure restorer (1920) which restores decoded nodes to a tree structure.

**25.** The apparatus for claim 24, wherein the node decoder comprises:

a continue flag decoder (2000) which decodes a continue flag indicating whether or not a current node is the end of the bitstream; and
a node position information (2010) decoder which reads node position information indicating which candidate node in a queue is a current node and decoding the node position information,

wherein the S node decoder (2030) decodes an average color of eight sub-nodes of the current node as Detailed Information Bit data, i.e. DIB data, and then sequentially decodes the eight sub-nodes into black nodes (B) or white nodes (W); and
wherein the P node decoder (2040) PPM-decodes DIB data of the current node and then decodes R, G, and B values of 'B' voxels of the current node by carrying out inverse AAC and inverse DPCM decoding an 'S' node, if the node type information indicates that a current node is a PPM node.

**26.** A computer-readable recording medium on which a program enabling the method of any of claims 1 through 14 or 20 through 23 is recorded.

**Patentansprüche**

1. Verfahren zum Kodieren von dreidimensionalen Objektdaten, die Punktteackurdaten, Voxeldaten und Octreestrukturdaten umfassern, wobei das Verfahren umfasst:

   (a) Erzeugen von dreidimensionalen Objektdaten mit einer Baumstruktur, in der an Knoten angefügte Markierungen sind, die ihren Typ angeben,
   (b) Kodieren von Knoten der dreidimensionalen Objektdaten und
   (c) Erzeugen der dreidimensionalen Objektdaten, deren Knoten in einen Bitstrom kodiert sind,
   wobei der Schritt zum Erzeugen der dreidimensionalen Objektdaten mit einer Baumstruktur umfasst: Umwandeln der dreidimensionalen Objektdaten in Voxeldaten unter Verwendung eines dreidimensionalen Bounding-Volumens und unterschiedliches Markieren der Voxel in Abhängigkeit davon, ob sie an Stellen gelegen sind, an denen Objekte vorliegen, so dass die Voxel voneinander unterschieden sind,
   und **dadurch gekennzeichnet, dass** es die Schritte umfasst:

   Markieren eines Knotens mit Unterknoten als einer ersten Kategorie zugehörig,
   Markieren eines Knotens, dessen Voxel keine Objekte enthalten, als einer zweiten Kategorie zugehörig,
   Markieren eines Knotens, dessen Voxel alle Objekte enthalten, als einer dritten Kategorie zugehörig, und
   Markieren eines Knotens, dessen Voxel unter Verwendung eines Prediction-by-Partial-Matching(PPM)-Algorithmus kodiert sind, als einer vierten Kategorie zugehörig,

   wobei Voxelwerte unter Verwendung eines PPM-Algorithmus kodiert werden, wenn der Knoten einige Voxel besitzt, die keine Objekte enthalten, und einige Voxel besitzt, die Objekte enthalten.

2. Verfahren nach einem der vorhergehenden Ansprüche, wobei Kodieren der Knoten der dreidimensionalen Objektdaten umfasst:

   Kodieren von Knoteninformationen, die angeben, ob ein vorliegender Knoten als der ersten oder vierten Kategorie zugehörig markiert ist, und
   Kodieren von Detailinformationsbit(DIB)-Daten eines Knotens der ersten Kategorie, wenn die Knoteninformationen angeben, dass der vorliegende Knoten ein Knoten der ersten Kategorie ist, und Kodieren von DIB-Daten eines Knotens der vierten Kategorie, wenn die Knoteninformationen angeben, dass der vorliegende Knoten ein Knoten der vierten Kategorie ist.

3. Verfahren nach einem der vorhergehenden Ansprüche, wobei beim Kodieren der Knoten der dreidimensionalen Objektdaten nur einige der Knoten der dreidimensionalen Objektdaten, die von einem Wurzelknoten zu einem vorgegebenen unteren Knoten reichen, kodiert werden.

4. Verfahren nach Anspruch 1, wobei beim Kodieren der Knoten der dreidimensionalen Objektdaten alle Knoten der dreidimensionalen Objektdaten kodiert werden.

5. Verfahren nach Anspruch 1, weiter umfassend:

   (ab) Vereinen der Knoten der dreidimensionalen Objektdaten mit einer Baumstruktur durch Bezugnahme auf ihre Markierungen und
   (d) wiederholtes Ausführen der Schritte (a) bis (c), bis ein oberster Knoten der Baumstruktur, die die dreidimensionalen Objektdaten darstellt, kodiert ist, wobei der Schritt (b) zum Kodieren von Knoten ein Kodieren von vereinten Knoten umfasst.

6. Verfahren nach Anspruch 5, wobei Schritt (ab) umfasst:

   Auswählen von Knoten der ersten oder vierten Kategorie, deren Unterknoten als in der zweiten Kategorie oder dritten Kategorie markiert sind, als potentielle zu vereinende Knoten,
   Auswählen eines Knotens, der ein Verhältnis einer Differenz $\Delta D$ zwischen der Anzahl an verzerrten Bits vor einem Vereinen der potentiellen Knoten und der Anzahl an verzerrten Bits nach einem Vereinen der potentiellen Knoten zu einer Differenz $\Delta R$ zwischen der Anzahl an Bits vor einem Vereinen der potentiellen Bits und der Anzahl an Bits nach einem Vereinen der potentiellen Bits minimieren kann, als optimalen Knoten aus den potentiellen Knoten.

Markieren des ausgewählten Knotens als der dritten Kategorie zugehörig und
Aktualisieren aller potentiellen Knoten außer dem als optimalen Knoten ausgewählten Knoten.

**7.** Verfahren nach Anspruch 6, wobei ΔD in der folgenden Gleichung unter Verwendung einer Hamming-Distanz zwischen einem ursprünglichen Modell V und seiner Annäherung $\overline{V}$ als Verzerrungsmaß berechnet wird:

$$D = \sum_{X=1}^{X} \sum_{Y=1}^{Y} \sum_{Z=1}^{Z} \left| V(x, y, z) - \overline{V}(x, y, z) \right|$$

wobei XxYxZ die Auflösung des ursprünglichen Modells darstellt.

**8.** Verfahren nach Anspruch 5 oder 6, wobei Schritt (b) zum Kodieren von Knoten umfasst:

Kodieren eines Fortsetzungs-Flags, das Informationen darstellt, die angeben, ob die potentiellen Knoten in einer Reihe vorliegen,
Kodieren von Knotenpositionsinformationen, die eine Position jedes der potentiellen Knoten in der Reihe angeben,
Kodieren von Knotentypinformationen, die angeben, ob ein vorliegender Knoten ein Knoten der ersten Kategorie oder ein Knoten der vierten Kategorie ist, und
Kodieren von DIB-Daten eines Knotens der ersten Kategorie, wenn die Knoteninformationen angeben, dass der vorliegenden Knoten ein Knoten der ersten Kategorie ist, und Kodieren von DIB-Daten eines Knotens der vierten Kategorie, wenn die Knoteninformationen angeben, dass der vorliegende Knoten ein Knoten der vierten Kategorie ist.

**9.** Verfahren nach Anspruch 8, wobei das Kodieren der DIB-Daten des Knotens der ersten Kategorie umfasst:

Kodieren eines Mittelwerts von Farbinformationen und
Kodieren von Markierungen von acht Unterknoten des vorliegenden Knotens.

**10.** Verfahren nach Anspruch 8 oder 9, wobei das Kodieren der DIB-Daten des Knotens der vierten Kategorie umfasst:

Kodieren von Tiefeninformationen und
Kodieren von Farbinformationen

**11.** Verfahren nach Anspruch 10, wobei beim Kodieren der Tiefeninformationen alle Knoten unterhalb eines vorgegebenen Knotens in der Baumstruktur, die die dreidimensionalen Objektdaten darstellt, gemäß einer Rasterabtastfolge unter Verwendung einer vorgegebenen Anzahl an Kontexten PPM-kodiert werden.

**12.** Verfahren nach Anspruch 10, wobei beim Kodieren der Farbinformationen Rot(R)-, Grün(G)- und Blau(B)-Werte von Voxeln der dritten Kategorie des vorliegenden Knotens **dadurch** kodiert werden, dass eine Kodierung durch Differential-Puls-Code-Modulation (DPCM) und Adaptive-Arithmetic-Coding (AAC) ausgeführt wird.

**13.** Verfahren nach einem der Ansprüche 5 bis 12, wobei in Schritt (b) nur einige der vereinten Knoten im Bereich von einem ersten bis zu einem vorgegebenen nummerierten Knoten kodiert werden.

**14.** Verfahren nach einem der Ansprüche 5 bis 12, wobei in Schritt (b) alle vereinten Knoten kodiert werden.

**15.** Vorrichtung zum Kodieren von dreidimensionalen Objektdaten, die Punkttexturdaten, Voxeldaten und Octreestrukturdaten umfassen, wobei die Vorrichtung umfasst:

einen Baumstrukturgenerator (1100), der dreidimensionale Objektdaten erzeugt, die eine Baumstruktur aufweisen, in der an Knoten angefügte Markierungen sind, die ihren Typ angeben, wobei der Baumstrukturgenerator dazu ausgebildet ist, die dreidimensionalen Objektdaten unter Verwendung eines dreidimensionalen Bounding-Volumens in Voxeldaten umzuwandeln und die Voxel in Abhängigkeit davon, ob sie an Stellen gelegen sind, an denen Objekte vorliegen, unterschiedlich zu markieren, so dass die Voxel voneinander unterschieden sind,
einen Vereinigungsfolgenselektor (1110), der die Knoten der dreidimensionalen Objektdaten durch Bezugnahme auf ihre Markierungen vereint,

einen Knoten-Kodierer (1120), der vereinte Knoten kodiert, und
einen Bitstromgenerator (1130), der die dreidimensionalen Objektdaten, erzeugt, deren vereinte Knoten in einen Bitstrom kodiert werden, und

**dadurch gekennzeichnet, dass** der Baumstrukturgenerator (1100) weiter dazu ausgebildet ist, einen Knoten mit Unterknoten als einer ersten Kategorie zugehörig zu markieren,
einen Knoten, dessen Voxel keine Objekte enthalten, als einer zweiten Kategorie zugehörig zu markieren,
einen Knoten, dessen Voxel alle Objekte enthalten, als einer dritten Kategorie zugehörig zu markieren, und
einen Knoten, dessen Voxel unter Verwendung eines Prediction-by-Partial-Matching(PPM)-Algorithmus kodiert sind, als einer vierten Kategorie zugehörig zu markieren,
wobei Voxelwerte unter Verwendung eines PPM-Algorithmus kodiert werden, wenn der Knoten einige Voxel besitzt, die keine Objekte enthalten, und einige Voxel besitzt, die Objekte enthalten.

**16.** Vorrichtung nach Anspruch 15, wobei der Vereinigungsfolgenselektor (1110) umfasst:

einen Selektor (1200) für potentielle Knoten, der Knoten der ersten oder vierten Kategorie, deren Unterknoten als der zweiten Kategorie oder dritten Kategorie zugehörig markiert sind, als potentielle zu vereinende Knoten auswählt,
einen Selektor (1210) für optimale Knoten, der einen Knoten, der ein Verhältnis einer Differenz $\Delta D$ zwischen der Anzahl an verzerrten Bits vor einem Vereinen der potentiellen Knoten und der Anzahl an verzerrten Bits nach einem Vereinen der potentiellen Knoten zu einer Differenz $\Delta R$ zwischen der Anzahl an Bits vor einem Vereinen von potentiellen Bits und der Anzahl an Bits nach einem Vereinen der potentiellen Bits minimieren kann, als optimalen Knoten aus den potentiellen Knoten auswählt und den ausgewählten Knoten als der dritten Kategorie zugehörig markiert, und
einen Aktualisierer (1220) für potentielle Knoten, der alle potentiellen Knoten außer dem als optimalen Knoten ausgewählten Knoten aktualisiert.

**17.** Vorrichtung nach Anspruch 15 oder 16, wobei der Knoten-Kodierer (1120) umfasst:

einen Kodierer (1500) für Fortsetzungs-Flags, der ein Fortsetzungs-Flag kodiert, das Informationen darstellt, ob ein vorliegender Knoten das Ende eines komprimierten Bitstroms bildet,
einen Knotenpositions-Kodierer (1510), der Knotenpositionsinformationen kodiert, die eine Position jedes der potentiellen Knoten in der Reihe angibt,
einen Knoten-"S"-oder-"P"(SOP)-Selektor (1520), der Knotentypinformationen kodiert, die angeben, ob der vorliegende Knoten ein Knoten der ersten Kategorie oder ein Knoten der vierten Kategorie ist,
einen S-Knoten-Kodierer (1530), der Detailinformationsbitdaten, d. h. DIB-Daten, eines Knotens der ersten Kategorie kodiert, wenn die Knoteninformationen angeben, dass der vorliegende Knoten ein Knoten der ersten Kategorie ist, und
einen P-Knoten-Kodierer (1540), der DIB-Daten eines Knotens der vierten Kategorie kodiert, wenn die Knoteninformationen angeben, dass der vorliegende Knoten ein Knoten der vierten Kategorie ist.

**18.** Vorrichtung nach Anspruch 15, 16 oder 17, wobei der Knoten-Kodierer (1120) nur einige der vereinten Knoten im Bereich von einem ersten bis zu einem vorgegebenen nummerierten Knoten kodiert.

**19.** Vorrichtung nach Anspruch 15, 16 oder 17, wobei der Knoten-Kodierer (1120) alle vereinten Knoten kodiert.

**20.** Verfahren zum Dekodieren von dreidimensionalen Objektdaten, umfassend:

Lesen von Fortsetzungs-Flag-Informationen aus einem Bitstrom von kodierten dreidimensionalen Objektdaten und Dekodieren der Fortsetzungs-Flag-Informationen,

**dadurch gekennzeichnet, dass** es die Schritte umfasst:

Dekodieren von Knotentypinformationen des Bitstroms,
Dekodieren eines "S"-Knotens, wenn die Knotentypinformationen angeben, dass ein vorliegender Knoten ein Knoten ist, der Unterknoten aufweist, und Dekodieren eines PPM-Knotens, wenn die Knotentypinformationen angeben, dass der vorliegende Knoten ein Knoten ist, dessen Voxel unter Verwendung eines Prediction-by-Partial-Matching(PPM)-Algorithmus kodiert sind, und

**EP 1 431 919 B1**

Wiederherstellen der dreidimensionalen Objektdaten, deren Knoten in einer Baumstruktur kodiert sind.

**21.** Verfahren nach Anspruch 20, weiter umfassend den Schritt:

Lesen von Knotenpositionsinformationen, die angeben, welcher potentielle Knoten in einer Reihe ein vorliegender Knoten ist und Dekodieren der Knotenpositionsinformationen.

**22.** Verfahren nach Anspruch 21, wobei beim Dekodieren des "S"-Knotens eine mittlere Farbe von acht Unterknoten des vorliegenden Knotens als Detailinformationsbit(DIB)-Daten dekodiert wird und die acht Unterknoten sequentiell in schwarze Knoten ("B"-Knoten) dekodiert werden, deren Voxel alle Objekte enthalten, oder weiße Knoten ("W"-Knoten) dekodiert werden, deren Voxel keine Objekte enthalten.

**23.** Verfahren nach Anspruch 22, wobei beim Dekodieren des PPM-Knotens der vorliegende Knoten unter Verwendung von DIB-Daten PPM-dekodiert wird und R-, G- und B-Werte von "B"-Voxeln des vorliegenden Knotens **dadurch** dekodiert werden, dass eine inverse AAC oder eine inverse DPCM ausgeführt wird.

**24.** Vorrichtung zum Dekodieren eines Bitstroms von kodierten dreidimensionalen Objektdaten, wobei die Vorrichtung umfasst:

einen Bitstromleser (1900), der einen Bitstrom von kodierten dreidimensionalen Objektdaten empfängt, und **dadurch gekennzeichnet, dass** sie weiter umfasst:

einen Knotentypselektor (2020), der Knotentypinformationen des Bitstroms dekodiert,
einen "S"-Knoten-Dekodierer (2030), der einen vorliegenden Knoten dekodiert, wenn die Knotentypinformationen angeben, dass ein vorliegender Knoten ein Knoten mit Unterknoten ist,
einen "P"-Knoten-Dekodierer (2040), der einen vorliegenden Knoten dekodiert, wenn die Knotentypinformationen angeben, dass der vorliegende Knoten ein Knoten ist, dessen Voxel unter Verwendung eines Prediction-by-Partial-Matching(PPM)-Algorithmus kodiert sind, und
eine Baumstruktur-Wiederherstellungseinrichtung (1920), die dekodierte Knoten in eine Baumstruktur wiederherstellt.

**25.** Vorrichtung nach Anspruch 24, wobei der Knoten-Dekodierer umfasst:

einen Dekodierer (2000) für Fortsetzungs-Flags, der ein Fortsetzungs-Flag dekodiert, das angibt, ob ein vorliegender Knoten das Ende des Bitstroms bildet, und
einen Knotenpositionsinformationen-Dekodierer (2010), der Knotenpositionsinformationen liest, die angeben, welcher potentielle Knoten in einer Reihe ein vorliegender Knoten ist und die Knotenpositionsinformationen dekodiert,

wobei der S-Knoten-Dekodierer (2030) eine mittlere Farbe von acht Unterknoten des vorliegenden Knotens als Detailinformationsbit(DIB)-Daten dekodiert und dann die acht Unterknoten sequentiell in schwarze Knoten (B) oder weiße Knoten (W) dekodiert, und
wobei der P-Knoten-Dekodierer (2040) DIB-Daten des vorliegenden Knotens PPM-dekodiert und dann R-, G- und B-Werte von "B"-Voxeln des vorliegenden Knotens durch Ausführen einer inversen AAC- und inversen DPCM-Dekodierung eines "S"-Knotens dekodiert, wenn die Knotentypinformationen angeben, dass ein vorliegender Knoten ein PPM-Knoten ist.

**26.** Computerlesbares Aufzeichnungsmedium, auf dem ein Programm, das das Verfahren nach einem der Ansprüche 1 bis 14 oder 20 bis 23 ermöglicht, aufgezeichnet ist.

**Revendications**

**1.** Procédé destiné à coder des données d'objets tridimensionnels, lesquelles comportent des données de textures ponctuelles, des données de voxels (pixel 3D) et des données de structure d'octree, le procédé comportant les étapes ci-dessous consistant à :

(a) générer des données d'objets tridimensionnels présentant une structure arborescente dans laquelle des

**16**

noeuds sont munis d'étiquettes indiquant leurs types ;

(b) coder des noeuds des données d'objets tridimensionnels ; et

(c) générer les données d'objets tridimensionnels dont les noeuds sont codés en un train de bits ;

dans lequel, l'étape générant les données d'objets tridimensionnels présentant une structures arborescente comprend l'étape consistant à convertir les données d'objets tridimensionnels en des données de voxels, en faisant appel à un volume englobant tridimensionnel, et l'étape consistant à étiqueter de manière différentielle les voxels en fonction du fait qu'ils sont ou non localisés à des emplacements où des objets sont présents, de sorte que les voxels sont mutuellement différenciés,

et **caractérisé en ce qu'**il comprend les étapes ci-dessous consistant à :

étiqueter un noeud présentant des sous-noeuds en tant que noeud appartenant à une première catégorie ;

étiqueter un noeud dont les voxels ne contiennent pas d'objets en tant que noeud appartenant à une deuxième catégorie ;

étiqueter un noeud dont les voxels contiennent tous des objets en tant que noeud appartenant à une troisième catégorie ; et

étiqueter un noeud, dont les voxels sont codés en faisant appel à un algorithme de prédiction par concordance partielle, PPM, en tant que noeud appartenant à une quatrième catégorie ;

dans lequel des valeurs de voxel sont codées en faisant appel à un algorithme de prédiction PPM lorsque le noeud présente certains voxels qui ne contiennent pas d'objets et qu'il présente certains voxels qui contiennent des objets.

2.  Procédé selon l'une quelconque des revendications précédentes, dans lequel l'étape consistant à coder les noeuds des données d'objets tridimensionnels comporte les étapes consistant à :

coder des informations de noeud lesquelles indiquent si oui ou non un noeud en cours est étiqueté en tant qu'appartenant à la première ou à la quatrième catégorie ; et

coder des données de bits d'informations détaillées, c'est-à-dire, des données de bits DIB, d'un noeud de la première catégorie lorsque les informations de noeud indiquent que le noeud en cours est un noeud de la première catégorie, et coder des données de bits DIB d'un noeud de la quatrième catégorie lorsque les informations de noeud indiquent que le noeud en cours est un noeud de la quatrième catégorie.

3.  Procédé selon l'une quelconque des revendications précédentes, dans lequel, lors du codage des noeuds des données d'objets tridimensionnels, seuls certains des noeuds des données d'objets tridimensionnels, depuis un noeud racine jusqu'à un noeud inférieur prédéterminé, sont codés.

4.  Procédé selon la revendication 1, dans lequel, lors du codage des noeuds des données d'objets tridimensionnels, tous les noeuds des données d'objets tridimensionnels sont codés.

5.  Procédé selon la revendication 1, comportant en outre les étapes ci-dessous consistant à :

(ab) fusionner les noeuds des données d'objets tridimensionnels présentant une structure arborescente en faisant référence à leurs étiquettes ; et

(d) mettre en oeuvre de manière répétée les étapes (a) à (c) jusqu'à ce qu'un noeud le plus élevé de la structure arborescente représentant les données d'objets tridimensionnels soit codé, dans lequel l'étape (b) consistant à coder des noeuds comporte l'étape consistant à coder les noeuds fusionnés.

6.  Procédé selon la revendication 5, dans lequel l'étape (ab) comporte les étapes ci-dessous consistant à :

sélectionner des noeuds des première ou quatrième catégories, dont les sous-noeuds sont étiquetés en tant qu'appartenant à la deuxième catégorie ou à la troisième catégorie, en tant que noeuds candidats à fusionner ;

sélectionner, parmi les noeuds candidats, en tant qu'un noeud optimal, un noeud en mesure de minimiser un rapport d'une différence $\Delta D$ entre le nombre de bits déformés préalablement à la fusion des noeuds candidats et le nombre de bits déformés postérieurement à la fusion des noeuds candidats relativement à une différence $\Delta R$ entre le nombre de bits préalablement à la fusion des bits candidats et le nombre de bits postérieurement à la fusion des bits candidats ;

étiqueter le noeud sélectionné en tant que noeud appartenant à la troisième catégorie ; et

mettre à jour tous les noeuds candidats à l'exception du noeud sélectionné en qualité de noeud optimal.

**7.** Procédé selon la revendication 6, dans lequel le rapport △ $D$ est calculé dans l'équation ci-dessous en utilisant une distance de Hamming entre un modèle original $V$ et son approximation $\overline{V}$ en tant que mesure de la déformation :

$$D = \sum_{x=1}^{X} \sum_{y=1}^{Y} \sum_{z=1}^{Z} |V(x, y, z) - \bar{V}(x, y, z)|$$

où X x Y x Z représente la résolution du modèle original.

**8.** Procédé selon la revendication 5 ou 6, dans lequel l'étape (b) de codage des noeuds comporte les étapes consistant à :

coder un drapeau de continuité lequel représente des informations indiquant si oui ou non les noeuds candidats sont présents dans une file d'attente ,
coder des informations de position de noeud lesquelles indiquent la position de chacun des noeuds candidats dans la file d'attente ;
coder des informations de type de noeud lesquelles indiquent si oui ou non un noeud en cours est un noeud de la première catégorie ou un noeud de la quatrième catégorie ; et
coder des données de bits DIB d'un noeud de la première catégorie lorsque les informations de noeud indiquent que le noeud en cours est un noeud de la première catégorie, et coder des données de bits DIB d'un noeud de la quatrième catégorie lorsque les informations de noeud indiquent que le noeud en cours est un noeud de la quatrième catégorie,

**9.** Procédé selon la revendication 8, dans lequel l'étape consistant à coder les données de bits DIB du noeud de la première catégorie comporte les étapes consistant à :

coder une moyenne d'informations chromatiques ; et
coder des étiquettes de huit sous-noeuds du noeud en cours.

**10.** Procédé selon la revendication 8 ou 9, dans lequel l'étape codant les données de bits DIB du noeud de la quatrième catégorie comporte les étapes ci-dessous consistant à :

coder des informations de profondeur ; et
coder les informations chromatiques.

**11.** Procédé selon la revendication 10, dans lequel, lors du codage des informations de profondeur, tous les noeuds positionnés sous un noeud prédéterminé dans la structure arborescente représentant les données d'objets tridimensionnels sont codés par PPM selon un ordre de numérisation par balayage en faisant appel à un nombre de contextes prédéterminé.

**12.** Procédé selon la revendication 10, dans lequel, lors du, codage des informations chromatiques, les valeurs rouges (R), vertes (G), et bleues (B) de voxels de troisième catégorie du noeud en cours sont codées en mettant en oeuvre une modulation MIC à détection différentielle (DPCM) et un codage arithmétique adaptatif (AAC).

**13.** Procédé selon l'une quelconque des revendications 5 à 12, dans lequel, au cours de l'étape (b), seuls certains des noeuds fusionnés, depuis un premier noeud jusqu'à un noeud prédéterminé portant le numéro un, sont codés.

**14.** Procédé selon l'une quelconque des revendications 5 à 12, dans lequel, au cours de l'étape (b), tous les noeuds fusionnés sont codés.

**15.** Dispositif destiné à coder des données d'objets tridimensionnels, lesquelles comportent des données de textures ponctuelles, des données de voxels et des données de structure d'octree, le dispositif comportant :

un générateur de structure arborescente (1100) lequel génère des données d'objets tridimensionnels présentant une structure arborescente dans laquelle des noeuds sont munis d'étiquettes indiquant leurs types, dans lequel le générateur de structure arborescente est apte à convertir les données d'objets tridimensionnels en des données de voxels en faisant appel à un volume englobant tridimensionnel et à étiqueter de manière différenciée les voxels en fonction du fait qu'ils sont ou non localisés à des emplacements où des objets sont présents, de sorte que les voxels sont mutuellement différenciés ;
un sélecteur d'ordre de fusion (1110) lequel fusionne les noeud des données d'objets tridimensionnels en faisant référence à leurs étiquettes ;
un codeur de noeud (1120) lequel code les noeuds fusionnés ; et
un générateur de train de bits (1130) lequel génère les données d'objets tridimensionnels dont les noeuds fusionnés sont codés en un train de bits, et **caractérisé en ce que** le générateur de structure arborescente (1100) est en outre apte à :

étiqueter un noeud présentant des sous-noeuds en tant que noeud appartenant à une première catégorie ;
étiqueter un noeud dont les voxels ne contiennent pas d'objets en tant que noeud appartenant à une deuxième catégorie ;
étiqueter un noeud dont les voxels contiennent tous des objets en tant que noeud appartenant à une troisième catégorie ; et
étiqueter un noeud, dont les voxels sont codés en faisant appel à un algorithme de prédiction par concordance partielle, PPM, en tant que noeud appartenant à une quatrième catégorie ;

dans lequel, des valeurs de voxel sont codées en faisant appel à un algorithme de prédiction PPM lorsque le noeud présente certains voxels qui ne contiennent pas d'objets et qu'il présente certains voxels qui contiennent des objets.

**16.** Dispositif selon la revendication 15, dans lequel le sélecteur d'ordre de fusion (1110) comporte :

un sélecteur de noeud candidat (1200) lequel sélectionne les noeuds des première ou quatrième catégories, dont les sous-noeuds sont étiquetés en tant qu'appartenant à la deuxième catégorie ou à la troisième catégorie, en tant que noeuds candidats à fusionner ;
un sélecteur de noeud optimal (1210) lequel sélectionne, parmi les noeuds candidats, en tant qu'un noeud optimal, un noeud en mesure de minimiser un rapport d'une différence $\Delta D$ entre le nombre de bits déformés préalablement à la fusion des noeuds candidats et le nombre de bits déformées postérieurement à la fusion des noeuds candidats relativement à une différence $\Delta R$ entre le nombre de bits préalablement à la fusion des bits candidats et le nombre de bits postérieurement à la fusion des bits candidats et étiquette le noeud sélectionné en tant qu'appartenant à la troisième catégorie ; et
un module de mise à jour de noeud candidat (1220) lequel met à jour tous les noeuds candidats à l'exception du noeud sélectionné en qualité de noeud optimal.

**17.** Dispositif selon la revendication 15 ou 16, dans lequel le codeur de noeud (1120) comporte :

un codeur de drapeau de continuité (1500) lequel code un drapeau de continuité représentant des informations indiquant si oui ou non un noeud en cours représente l'extrémité d'un train de bits compressé ;
un codeur de position de noeud (1510) lequel code des informations de position de noeud indiquant la position de chacun des noeuds candidats dans la file d'attente ;
un sélecteur de noeud « S » ou « P » (SOP) (1520) lequel code des informations de type de noeud indiquant si oui ou non le noeud en cours est un noeud de la première catégorie ou un noeud de la quatrième catégorie ;
un codeur de noeud « S » (1530) lequel code des données de bits d'informations détaillées, c'est-à-dire, des données de bits DIB, d'un noeud de la première catégorie, lorsque les informations de noeud indiquent que le noeud en cours est un noeud de la première catégorie ; et
un codeur de noeud « P » (1540) lequel code des données de bits DIB d'un noeud de la quatrième catégorie lorsque les informations de noeud indiquent que le noeud en cours est un noeud de la quatrième catégorie.

**18.** Dispositif selon la revendication 15, 16 ou 17, dans lequel le codeur de noeud (1120) code uniquement certains des noeuds fusionnés, depuis un premier noeud jusqu'à un noeud prédéterminé portant le numéro un.

**19.** Dispositif selon la revendication 15, 16 ou 17, dans lequel le codeur de noeud (1120) code tous les noeuds fusionnés.

**20.** Procédé destiné à décoder des données d'objets tridimensionnels, comportant les étapes consistant à :

lire des informations de drapeau de continuité à partir d'un train de bits de données d'objets tridimensionnels codées et décoder les informations de drapeau de continuité, et **caractérisé en ce qu'**il comporte les étapes consistant à :

décoder des informations de type de noeud du train de bits ;

décoder un noeud « S » lorsque les informations de type de noeud indiquent qu'un noeud en cours est un noeud présentant des sous-noeuds, et décoder un noeud PPM lorsque les informations de type de noeud indiquent que le noeud en cours est un noeud dont les voxels sont codés en faisant appel à un algorithme de prédiction par concordance partielle, PPM ; et

restaurer les données d'objets tridimensionnels dont les noeuds sont codés au niveau d'une structure arborescente.

**21.** Procédé selon la revendication 20, comportant en outre l'étape consistant à :

lire les informations de position de noeud indiquant quel noeud candidat dans une file d'attente est un noeud en cours et décoder les informations de position de noeud.

**22.** Procédé selon la revendication 21, dans lequel, lors du décodage du noeud « S », une couleur moyenne de huit sous-noeuds du noeud en cours est décodée en tant que données de bits DIB, et les huit sous-noeuds sont séquentiellement décodés en des noeuds noirs (noeuds « B ») dont les voxels contiennent tous des objets ou des noeuds blancs (noeuds « W ») dont les voxels ne contiennent pas d'objets.

**23.** Procédé selon la revendication 22, dans lequel, lors du décodage du noeud PPM, le noeud en cours est décodé par PPM en faisant appel à dcs données de bits DIB, et des valeurs R, G, et B de voxels « B » du noeud en cours sont décodées en mettant en oeuvre un codage AAC inverse et une modulation DPCM inverse.

**24.** Dispositif destiné à décoder un train de bits de données d'objets tridimensionnels codées, le dispositif comportant :

un lecteur de train de bits (1900) lequel reçoit un train de bits de données d'objets tridimensionnels codées, et **caractérisé en ce qu'**il comporte en outre :

un sélecteur de type de noeud (2020) lequel décode des informations de type de noeud du train de bits ;

un décodeur de noeud « S » (2030) lequel décode un noeud en cours lorsque les informations de type de noeud indiquent qu'un noeud en cours est un noeud présentant des sous-noeuds ;

un décodeur de noeud « P » (2040) lequel décode un noeud en cours lorsque les informations de type de noeud indiquent que le noeud en cours est un noeud dont les voxels sont codés en faisant appel à un algorithme de prédiction par concordance partielle, PPM ; et

un module de restauration, de structure arborescente (1920) lequel restaure des noeuds décodés au niveau d'une structure arborescente.

**25.** Dispositif selon la revendication 24, dans lequel le décodeur de noeud comporte :

un décodeur de drapeau de continuité (2000) lequel décode un drapeau de continuité indiquant si oui ou non un noeud en cours représente l'extrémité du train de bits ; et

un décodeur d'informations de position de noeud (2010) lequel lit les informations de position de noeud indiquant qu'un noeud candidat dans une file d'attente est un noeud en cours, et décodant les informations de position de noeud,

dans lequel le décodeur de noeud « S » (2030) décode une couleur moyenne de huit sous-noeuds du noeud en cours en tant que données de bits DIB, et décode ensuite séquentiellement les huit sous-noeuds en noeuds noir (« B ») ou noeuds blancs (« W ») ; et

dans lequel, le décodeur de noeud « P » (2040) décode par PPM les données de bits DIB du noeud en cours et décode ensuite les valeurs R, G et B de voxels « B » du noeud en cours en mettant en oeuvre un décodage AAC inverse et une modulation DPCM inverse d'un noeud « S », lorsque les informations de type de noeud indiquent qu'un noeud en cours est un noeud PPM.

**26.** Support d'enregistrement lisible par un ordinateur sur lequel un programme autorisant la mise en oeuvre du procédé selon l'une quelconque des revendications 1 à 14 ou 20 à 23 est enregistré.

# FIG. 1

# FIG. 2

```
PointTexture {
    field   SFInt32   width           512
    field   SFInt32   height          512
    field   MFInt32   depth           [ ]
    field   MFColor   color           [ ]
    field   SFInt32   depthNbBits     8
}
```

to be compressed

# FIG. 3A

PARENT-CHILDREN RELATIONSHIP

# FIG. 3B

ORIGINAL MODEL AND ITS CORRESPONDING TREE

# FIG. 3C

APPROXIMATED MODEL AND MERGED TREE

# FIG. 3D

APPROXIMATED MODEL AND MERGED TREE

## FIG. 4

## FIG. 5

| Continue flag | Position | SOP("S" or "P") | DIB (Detailed Information Bits) |
|---|---|---|---|

## FIG. 6

| Continue flag | Position | SOP("S" or "P") | DIB (Detailed Information Bits) |
|---|---|---|---|

If "S"

| Average color | Ch1 | Ch2 | Ch3 | Ch4 | Ch5 | Ch6 | Ch7 | Ch8 |
|---|---|---|---|---|---|---|---|---|

| Ch | : white or not white |
|---|---|

## FIG. 7

| Continue flag | Position | SOP("S" or "P") | DIB (Detailed Information Bits) |
|---|---|---|---|

If "P"

| PPM bits + DPCM color bits |
|---|

# FIG. 8A

DEPTH=k-1

# FIG. 8B

DEPTH=k

# FIG. 9

(a)~(e) resolution: 256x256x256    (f)~(h) resolution: 512x512x512

(a) angel        (b) avatar        (c) dog        (d) plane

(e) flower        (f) white star        (g) fighter        (h) robots

# FIG. 10A

PRESENT INVENTION COMPARED WITH ORIGINAL BINARY DATA

|  | DEPTH | | | COLOR | | | TOTAL | | |
|---|---|---|---|---|---|---|---|---|---|
|  | P | O | R | P | O | R | P | O | R |
| Angel | 34,893 | 306,218 | 0.11 | 238,748 | 722,046 | 0.33 | 273,641 | 1,028,264 | 0.27 |
| Avatar | 6,396 | 87,184 | 0.07 | 35,813 | 64,944 | 0.55 | 42,209 | 152,128 | 0.28 |
| Dog | 11,501 | 111,262 | 0.10 | 64,312 | 137,178 | 0.47 | 75,813 | 248,440 | 0.31 |
| Plane | 5,254 | 96,946 | 0.05 | 51,256 | 94,230 | 0.54 | 56,510 | 191,176 | 0.30 |
| Flower | 17,804 | 98,469 | 0.18 | 65,016 | 98,799 | 0.66 | 82,820 | 197,268 | 0.42 |
| WhiteStar | 75,937 | 1,061,676 | 0.07 | 441,442 | 806,082 | 0.55 | 517,379 | 1,867,758 | 0.28 |
| Fighter | 38,108 | 906,308 | 0.04 | 275,853 | 573,030 | 0.48 | 313,961 | 1,479,338 | 0.21 |
| Robots | 105,458 | 1,285,188 | 0.08 | 669,236 | 1,141,350 | 0.59 | 774,694 | 2,426,538 | 0.32 |

# FIG. 10B

PRESENT INVENTION COMPARED WITH A COMMERCIAL TOOL (WinZip)

|  | DEPTH | | | COLOR | | | TOTAL | | |
|---|---|---|---|---|---|---|---|---|---|
|  | P | W | R | P | W | R | P | W | R |
| Angel | 34,893 | 150,853 | 0.23 | 238,748 | 402,118 | 0.59 | 273,641 | 552,971 | 0.49 |
| Avatar | 6,396 | 14,407 | 0.44 | 35,813 | 46,475 | 0.77 | 42,209 | 60,882 | 0.69 |
| Dog | 11,501 | 34,256 | 0.34 | 64,312 | 112,734 | 0.57 | 75,813 | 146,990 | 0.52 |
| Plane | 5,254 | 9,771 | 0.54 | 51,256 | 47,245 | 1.08 | 56,510 | 57,016 | 0.99 |
| Flower | 17,804 | 30,243 | 0.59 | 65,016 | 80,721 | 0.81 | 82,820 | 110,964 | 0.75 |
| WhiteStar | 75,937 | 250,174 | 0.30 | 441,442 | 725,630 | 0.61 | 517,379 | 975,804 | 0.53 |
| Fighter | 38,108 | 173,124 | 0.22 | 275,853 | 414,241 | 0.67 | 313,961 | 587,365 | 0.53 |
| Robots | 105,458 | 330,815 | 0.32 | 669,236 | 939,136 | 0.71 | 774,694 | 1,269,951 | 0.61 |

# FIG. 11

```
    ,1100              ,1110              ,1120              ,1130
┌──────────┐      ┌──────────┐      ┌──────────┐      ┌──────────┐
│   TREE   │      │ MERGING  │      │          │      │          │
│STRUCTURE │ ───→ │  ORDER   │ ───→ │  NODE    │ ───→ │BITSTREAM │
│GENERATOR │      │ SELECTOR │      │ ENCODER  │      │GENERATOR │
└──────────┘      └──────────┘      └──────────┘      └──────────┘
```

# FIG. 12

```
       ,1200              ,1210              ,1220
  ┌──────────┐      ┌──────────┐      ┌──────────┐
  │CANDIDATE │      │ OPTIMAL  │      │CANDIDATE │
  │   NODE   │ ───→ │  NODE    │ ───→ │   NODE   │
  │ SELECTOR │      │ SELECTOR │      │ UPDATER  │
  └──────────┘      └──────────┘      └──────────┘
```

# FIG. 13

START

i=0
COUNT=0 — 1300

NODE(i)='S'
(SUB-NODES OF 'S'
NODE='W' OR 'B') OR
NODE(i)='P'? — 1310

NO → i=i+1 — 1320

YES — 1330

QUEUE—NODE(i)
COUNT=COUNT+1

DOES
i INDICATE FINAL
NODE? — 1340

NO

YES

END

28

FIG. 14

```
        ┌─────────┐
        │  START  │
        └─────────┘
             │
             ▼
   ┌──────────────────────────────┐
   │      NODE(i) ─ QUEUE          │
   │ ( WHEN - ΔD/ΔR IS MINIMUM )   │─── 1410
   └──────────────────────────────┘
             │
             ▼
   ┌──────────────────────────────┐
   │        NODE(i) ─ "B"          │─── 1420
   └──────────────────────────────┘
             │
             ▼
   ┌──────────────────────────────┐
   │  DELETE NODE(i) FROM QUEUE    │─── 1430
   └──────────────────────────────┘
             │
             ▼
   ┌──────────────────────────────┐
   │        UPDATE QUEUE           │─── 1440
   └──────────────────────────────┘
             │
             ▼              1450
        ╱──────────╲
       ╱  ARE ALL   ╲        NO
      ⟨ NODES MERGED? ⟩────────────
       ╲            ╱
        ╲──────────╱
             │ YES
             ▼
        ┌─────────┐
        │   END   │
        └─────────┘
```

# FIG. 15

```
┌─────────────┐    ┌──────────┐    ┌──────────┐        ┌──────────┐
│  1500       │    │  1510    │    │  1520    │        │  1530    │
│ CONTINUE FLAG│──▶│  NODE    │──▶│  NODE    │────┬──▶│ S NODE   │
│  ENCODER    │    │ POSITION │    │  SOP     │    │   │ ENCODER  │
│             │    │ ENCODER  │    │ SELECTOR │    │   │          │
└─────────────┘    └──────────┘    └──────────┘    │   └──────────┘
                                                   │
                                                   │   ┌──────────┐
                                                   │   │  1540    │
                                                   └──▶│ P NODE   │
                                                       │ ENCODER  │
                                                       └──────────┘
```

# FIG. 16

```
                    ( START )
                        │
                        ▼
          ┌──────────────────────────┐
          │  ENCODE CONTINUE FLAG    │── 1600
          └──────────────────────────┘
                        │
                        ▼
          ┌──────────────────────────┐
          │   ENCODE POSITION        │── 1610
          │   INFORMATION            │
          └──────────────────────────┘
                        │
                        ▼
                    ◇ 1620
                 NODE='P'?    ─────── NO ──────┐
                        │                      │
                    YES │ 1630                 │ 1640
                        ▼                      ▼
          ┌──────────────────┐    ┌──────────────────┐
          │  ENCODE 'P' NODE │    │  ENCODE 'S' NODE │
          └──────────────────┘    └──────────────────┘
                        │                      │
                        ◀──────────────────────┘
                        ▼
                    ◇ 1650
         NO ──── HAVE ALL NODES BEEN ENCODED?
                        │
                    YES │
                        ▼
                    ( END )
```

# FIG. 17

START

ENCODE MEAN COLOR INFORMATION — 1700

ENCODE LABELS OF 8 SUB-NODES — 1710

END

# FIG. 18

START

ENCODE PPM DEPTH INFORMATION — 1800

ENCODE DPCM COLOR INFORMATION — 1810

END

FIG. 19

```
        1900              1910                    1920
   ┌───────────┐     ┌───────────┐     ┌───────────────┐
   │ BITSTREAM │────▶│   NODE    │────▶│     TREE      │
   │  READER   │     │  DECODER  │     │  STRUCTURE    │
   └───────────┘     └───────────┘     │ RECONSTRUCTOR │
                                       └───────────────┘
```

FIG. 20

```
      2000               2010              2020                2030
 ┌───────────────┐  ┌───────────────┐  ┌──────────┐     ┌───────────┐
 │ CONTINUE FLAG │─▶│ NODE POSITION │─▶│  NODE    │──┬─▶│  S NODE   │
 │    DECODER    │  │  INFORMATION  │  │  TYPE    │  │  │  DECODER  │
 └───────────────┘  │    DECODER    │  │ SELECTOR │  │  └───────────┘
                    └───────────────┘  └──────────┘  │
                                                     │        2040
                                                     │  ┌───────────┐
                                                     └─▶│  P NODE   │
                                                        │  DECODER  │
                                                        └───────────┘
```

# FIG. 21

```
                    START

        DECODE CONTINUE FLAG  — 2100

        DECODE NODE POSITION  — 2110
            INFORMATION

                                    2120
              NODE='P'?              NO

         YES    2130          2140
      DECODE 'P' NODE    DECODE 'S' NODE

                              2150
                    HAVE ALL
       NO          NODE BEEN
                   DECODED?

                      YES

                      END
```

# FIG. 22

START

DECODE MEAN COLOR INFORMATION — 2200

DECODE LABELS OF 8 SUB-NODES — 2210

END

# FIG. 23

START

DECODE PPM DEPTH INFORMATION — 2300

DECODE DPCM COLOR INFORMATION — 2310

END

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Duan ; Li.** Compression of the Layered Depth Image. *IEEE Trans. Image Processing,* March 2003, vol. 12 (3), 365-372
- **C. S. Kim ; S. U. Lee.** Compact Encoding of 3D Voxel Surface Based on Pattern Code Representation. *IEEE Trans. Image Processing,* 2002, vol. 11 (8), 932-943
- depth Image-Based Representations for Statis Animated 3D Objects. *Laboratory of Computer Graphics at Dep of CS MSU,* 25 July 2002, 1-27, http://garaphics.cs.msu.su/en/publications/text/dibr csvt2002.pdf